# EUROPEAN PATENT APPLICATION

(11) **EP 4 542 849 A1**
(43) Date of publication of application: **23.04.2025**
(21) Application number: 23823660.8
(22) Date of filing: 26.05.2023
(51) Int. Cl.: H02P 27/06, B25F 5/00, B27B 9/00, H02P 3/22, H02P 25/18

(54) **WORK MACHINE**

(30) Priority: 17.06.2022 JP 2022097951; 30.11.2022 JP 2022192450; 23.12.2022 JP 2022206186; 31.01.2023 JP 2023013356
(71) Applicant: Koki Holdings Co., Ltd., Tokyo 108-6020 (JP)
(72) Inventor: TANIMOTO, Hideyuki, Hitachinaka-City, Ibaraki 3128502 (JP); NISHIKAWA, Tomomasa, Hitachinaka-City, Ibaraki 3128502 (JP); TAKEHISA, Masashi, Hitachinaka-City, Ibaraki 3128502 (JP); HASHIZUME, Kensuke, Hitachinaka-City, Ibaraki 3128502 (JP); KUMAKURA, Takeru, Hitachinaka-City, Ibaraki 3128502 (JP); KURAGANO, Shinji, Hitachinaka-City, Ibaraki 3128502 (JP); ORIKASA, Ruiki, Hitachinaka-City, Ibaraki 3128502 (JP)
(74) Representative: Meissner Bolte Partnerschaft mbB
(86) International application number: PCT/JP2023/019609
(87) International publication number: WO 2023/243361

(57) **Abstract**

Provided is a work machine capable of controlling a connection switching unit at an appropriate timing. A computing unit 50 is capable of performing connection switching control for switching the coil connection scheme of a motor 340 from a delta connection to a star connection. The computing unit 50 is configured to start the connection switching control in a state where the motor rotational speed is higher than the idling rotational speed (star connection idling rotational speed) of the motor 340 during the star connection, and complete the same while the motor rotational speed is equal to or lower than the star connection idling rotational speed. The computing unit 50 is configured so as to, when an inverter circuit 64 is in a drive stop state during the connection switching control, switch from a state in which a delta connection relay element 32 is ON and a star connection relay element 33 is OFF to a state in which both the delta connection relay element 32 and the star connection relay element 33 are OFF (connection terminated state), and switch from the connection terminated state to a state in which the delta connection relay element 32 is OFF and the star connection relay element 33 is ON.

## Description

### Technical Field

The present invention relates to a work machine.

### Related Art

There is known a technology (motor connection switching technology) that enables driving suitable for work by changing the connection scheme of the coils of the motor.

Patent Document 1 describes an electric power tool as a work machine that is capable of switching the connection scheme of the coils of the motor depending on the type of power supply (power supply voltage) connected.

Patent Document 2 describes an electric power tool as a work machine in which the windings of the motor are star-connected (Y-connected) and the number of series connections or the number of parallel connections of coils in the star connection can be switched depending on the work load applied to the motor. It is also described that a period during which the switching of the connection relationship is repeated is provided when switching the connection relationship of the windings, thereby suppressing abrupt changes in torque and rotational speed.

Patent Document 3 describes motor control for automobile that is capable of switching between star connection and delta connection.

### Citation List

### Patent Documents

Patent Document 1: Japanese Patent Application Laid-Open No. 2017-121158
Patent Document 2: Japanese Patent Application Laid-Open No. 2013-111734
Patent Document 3: Japanese Patent Application Laid-Open No. H5-003694

### SUMMARY OF INVENTION

### Technical Problem

The inventors have recognized that there are problems to be solved when introducing the motor connection switching technology into a work machine. · Problem 1 ... to provide a work machine that has a high working speed while using the motor connection switching technology. · Problem 2 ... to provide a work machine that has high reliability against breakdowns while using the motor connection switching technology. · Problem 3 ... to provide a work machine that has high durability against overload while using the motor connection switching technology. · Problem 4 ... to provide a work machine that can apply an electric brake to the motor while using the motor connection switching technology.

The present invention aims to solve at least one of the above problems 1 to 4.

### Solution to Problem

One aspect of the present invention relates to a work machine. This work machine includes: a motor having a plurality of windings; a drive unit driving the motor; a connection switching unit configured to be capable of switching between a high rotational speed connection state in which the plurality of windings are connected to each other to have a high rotational speed characteristic, and a high torque connection state in which the plurality of windings are connected to each other to have a high torque characteristic; an operation unit operating start and stop of the motor; and a controller controlling the drive unit and the connection switching unit, in which the controller is capable of executing connection switching control for switching from the high rotational speed connection state to the high torque connection state, and is configured to start the connection switching control in a state where a rotational speed of the motor is higher than an idling rotational speed of the high torque connection state.

Another aspect of the present invention relates to a work machine. This work machine includes: a motor having a plurality of windings; a drive unit driving the motor; a connection switching unit configured to be capable of switching from one connection state to the other connection state of a high rotational speed connection state in which the plurality of windings are connected to each other to have a high rotational speed characteristic, and a high torque connection state in which the plurality of windings are connected to each other to have a high torque characteristic; an operation unit operating start and stop of the motor; and a controller controlling the drive unit and the connection switching unit, in which the controller is capable of executing connection switching control for switching from the one connection state to the other connection state, and is configured to switch the drive unit to a drive stop state in which supply of drive power to the motor is stopped, and to switch the connection switching unit from the one connection state to a connection terminated state in which the plurality of windings are cut off from each other, in the connection switching control.

Another aspect of the present invention relates to a work machine. This work machine includes: a motor having a rotor and a stator having a plurality of windings; a connection switching unit capable of switching a connection scheme of the plurality of windings between a first connection scheme for high speed rotation and a second connection scheme for high torque; a drive unit having a plurality of switching elements and driving the motor; and a controller controlling the drive unit and the connection switching unit, in which the controller is configured in a first mode to be capable of executing connection switching control for switching the connection scheme from the first connection scheme to the second connection scheme in response to an increase in a work load applied to the motor, and is configured to be capable of executing overload protection control for stopping the motor not before the connection switching control but only after the connection switching control when the work load satisfies an overload protection condition.

Another aspect of the present invention relates to a work machine. This work machine includes: a motor having a rotor and a stator having a plurality of windings; a connection switching unit capable of switching a connection scheme of the plurality of windings between a first connection scheme for high speed rotation and a second connection scheme for high torque; a drive unit having a plurality of switching elements and driving the motor; a controller controlling the drive unit and the connection switching unit; and a mode selection unit operable by an operator, in which the controller is configured to be capable of selecting whether to drive the motor in a first mode configured to be capable of executing connection switching control for switching the connection scheme from the first connection scheme to the second connection scheme in response to an increase in a work load applied to the motor, or a second mode configured to maintain the connection scheme in the second connection scheme, in response to an operation of the mode selection unit performed by the operator.

Another aspect of the present invention relates to a work machine. This work machine includes: a motor having a plurality of windings driven by supply power from a power supply; a connection switching unit capable of switching a connection scheme of the plurality of windings of the motor between a first connection scheme for high speed rotation and a second connection scheme for high torque; a controller controlling the motor and the connection switching unit; a housing housing the motor, the connection switching unit, and the controller; and a detection unit detecting a physical quantity that changes due to driving of the motor or a type of the power supply, in which the controller is configured to execute connection switching control for switching the connection scheme from the first connection scheme to the second connection scheme in a case when a predetermined winding switching condition is satisfied, the detected value includes a work load applied to the motor, and the winding switching condition includes a duration of any of the work load equal to or greater than a load threshold value being equal to or greater than a time threshold value that varies depending on a magnitude of the work load.

Another aspect of the present invention relates to a work machine. This work machine includes: a motor having a rotor and a stator having a plurality of windings; a connection switching unit switching connection of the plurality of windings; a drive unit having a plurality of switching elements and driving the motor; a controller controlling the drive unit and the connection switching unit; and a switch instructing start and stop of the motor, in which the controller is configured to control the connection switching unit to switch the connection from a high speed rotation mode to a high torque mode when a load applied to the motor increases, and the controller is configured to switch to the high torque mode and apply an electric brake to the motor when the switch is turned off in the high speed rotation mode.

Another aspect of the present invention relates to a work machine. This work machine includes: a motor having a rotor and a stator having a plurality of windings; a connection switching unit switching connection of the plurality of windings; a drive unit having a plurality of switching elements and driving the motor; a controller controlling the drive unit and the connection switching unit; and a switch instructing start and stop of the motor, in which the controller is configured to control the connection switching unit to switch the connection from a high speed rotation mode to a high torque mode when a load applied to the motor increases, and the controller is configured to apply an electric brake to the motor while in the high speed rotation mode to stop the motor when the switch is turned off in the high speed rotation mode.

The present invention may be expressed as an "electric work machine," an "electric power tool," an "electrical device," etc., and such expressions are also valid as aspects of the present invention.

### Effects of Invention

According to the present invention, at least one of the above problems 1 to 4 can be solved.

### BRIEF DESCRIPTION OF DRAWINGS

[FIG. 1] is a perspective view of the work machine 1 according to the first embodiment of the present invention as viewed from above.
[FIG. 2] is a perspective view of the work machine 1 as viewed from below.
[FIG. 3] is a front view of the work machine 1.
[FIG. 4] is a cross-sectional view taken along C-C in FIG. 3.
[FIG. 5] is a cross-sectional view showing a state where the left opening of the intermediate housing 324 in FIG. 4 is covered with the cover member 328.
[FIG. 6] is a cross-sectional view of the motor 340 of the work machine 1.
[FIG. 7] is an external view of the operation panel 316 of the work machine 1.
[FIG. 8] is a circuit block diagram of the work machine 1.
[FIG. 9] is a simplified graph showing the relationship between the torque and the rotational speed of the motor 340 in the case where the motor 340 is of low speed rotation specifications.
[FIG. 10] is a simplified graph showing the relationship between the effective current value and the torque of the motor 340 in the case where the motor 340 is of low speed rotation specifications.
[FIG. 11] is a simplified graph showing the relationship between the torque and the rotational speed of the motor 340 in the case where the motor 340 is of high speed rotation specifications.
[FIG. 12] is a simplified graph showing the relationship between the effective current value and the torque of the motor 340 in the case where the motor 340 is of high speed rotation specifications.
[FIG. 13] is a graph showing the relationship between the product torque and the saw blade rotational speed of the work machine 1.

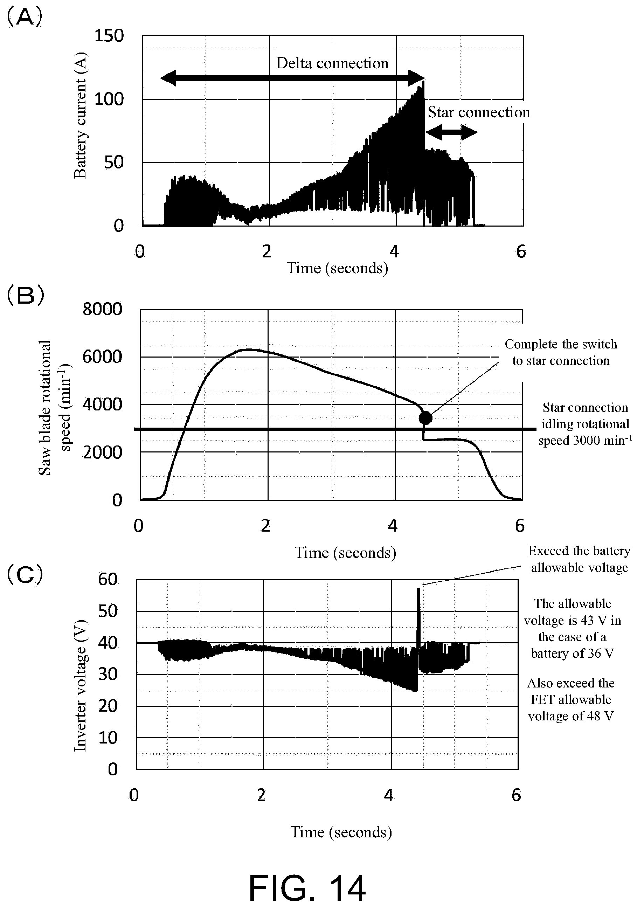

[FIG. 14](A) is a graph showing an example of the change over time in the current flowing through the battery pack 307 of the work machine 1 in the case where the first control is performed to complete the switch from delta connection to star connection in a state where the rotational speed of the motor 340 is higher than the idling rotational speed in star connection. (B) is a graph showing an example of the change over time in the saw blade rotational speed of the work machine 1 in the case where the first control is performed. (C) is a graph showing an example of the change over time in the voltage between the input terminals of the inverter circuit 64 of the work machine 1 in the case where the first control is performed.
[FIG. 15](A) to (C) are graphs enlarging the vicinity of the connection switching timing in FIG. 14(A) to (C), respectively. (D) is a graph showing the on/off of the inverter circuit 64 on the same time scale as FIG. 15(A) to (C).

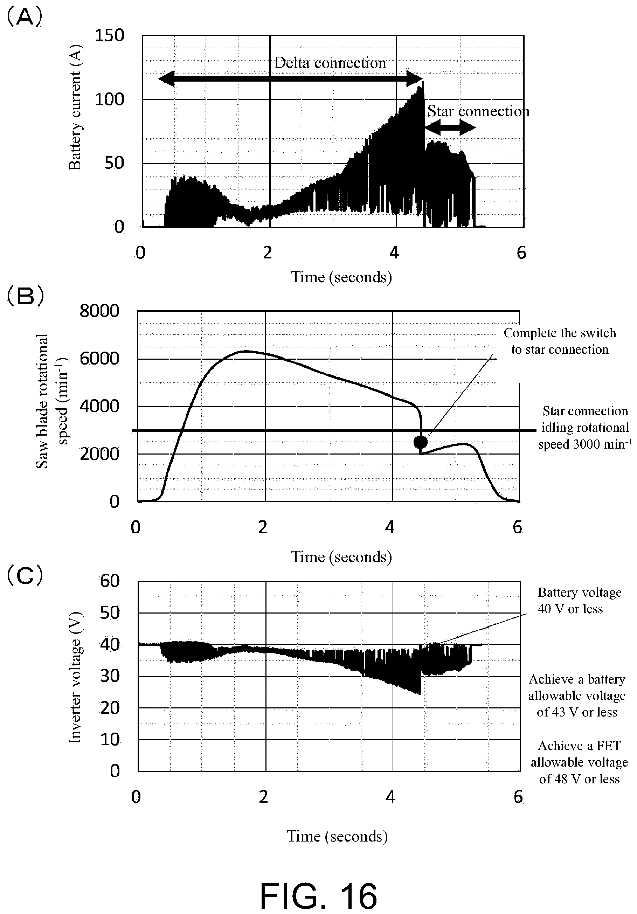

[FIG. 16](A) is a graph showing an example of the change over time in the current flowing through the battery pack 307 of the work machine 1 in the case where the second control is performed to complete the switch from delta connection to star connection after the rotational speed of the motor 340 becomes equal to or lower than the idling rotational speed in star connection. (B) is a graph showing an example of the change over time in the saw blade rotational speed of the work machine 1 in the case where the second control is performed. (C) is a graph showing an example of the change over time in the voltage between the input terminals of the inverter circuit 64 of the work machine 1 in the case where the second control is performed.
[FIG. 17](A) to (C) are graphs enlarging the vicinity of the connection switching timing in FIG. 16(A) to (C), respectively. (D) is a graph showing the on/off of the inverter circuit 64 on the same time scale as FIG. 17(A) to (C).
[FIG. 18] is a diagram showing the change over time in the on/off of the delta connection relay element 32 and the star connection relay element 33 in the case of instructing to turn off the delta connection relay element 32 and turn on the star connection relay element 33 simultaneously in the connection switching control.
[FIG. 19] is a diagram showing the change over time in the on/off of the delta connection relay element 32 and the star connection relay element 33 in the case of instructing to turn off the delta connection relay element 32 and then instructing to turn on the star connection relay element 33 after a waiting time in the connection switching control.
[FIG. 20] is a simplified graph showing an example of the change over time in the expected rotational speed of the motor 340 in the case where the third control is performed to complete the connection switching control at the timing when the rotational speed of the motor 340 drops to the expected rotational speed in star connection.
[FIG. 21] is a simplified graph showing an example of the change over time in the actual rotational speed of the motor 340 in the case where the third control is performed.
[FIG. 22] is a simplified graph showing an example of the change over time in the actual rotational speed of the motor 340 in the case where the fourth control is performed to complete the connection switching control before the rotational speed of the motor 340 drops to the expected rotational speed in star connection.
[FIG. 23] is a simplified graph showing an example of the change over time in the actual rotational speed of the motor 340 in the case where the fifth control is performed to perform the constant speed control during star connection and to complete the connection switching control at the timing when the rotational speed of the motor 340 drops to the rotational speed of the constant speed control in star connection.
[FIG. 24] is a control flowchart of the work machine 1.
[FIG. 25] is a graph showing the relationship between the motor torque and the motor rotational speed of the work machine 1 in regard to the second embodiment of the present invention, in the case where the pressing load of the work machine 1 against the counter material is increased in both the automatic switching mode and the tenacity mode.
[FIG. 26] is a graph showing the relationship between the saw blade torque and the saw blade rotational speed of the work machine 1, in the case where the pressing load of the work machine 1 against the counter material is increased in both the automatic switching mode and the tenacity mode.
[FIG. 27] is a graph showing the relationship between the saw blade torque and the saw blade rotational speed of the work machine 1, in the case where the pressing load of the work machine 1 against the counter material is increased and then decreased in the automatic switching mode.
[FIG. 28] is a graph showing the relationship between the effective battery current value and the saw blade rotational speed of the work machine 1, in the case where the pressing load of the work machine 1 against the counter material is increased and then decreased in the automatic switching mode.
[FIG. 29] is a control flowchart of the automatic switching mode of the work machine 1, in the case where the trigger switch 306 is turned on and then the pressing load of the work machine 1 against the counter material is increased.
[FIG. 30] is a control flowchart of the automatic switching mode of the work machine 1, in the case where the pressing load of the work machine 1 against the counter material is decreased during operation in star connection.
[FIG. 31] is a control flowchart of the tenacity mode of the work machine 1.
[FIG. 32] is a flowchart of the overload protection control of the work machine 1.
[FIG. 33] is a flowchart of the protection control based on the discharge stop signal from the battery pack 307 of the work machine 1.
[FIG. 34] is a graph showing the change over time in the battery current and the saw blade rotational speed in the automatic switching mode of the work machine 1, in the case where the pressing load of the work machine 1 against the counter material is set to 110 N or less.
[FIG. 35] is a graph enlarging the vicinity of the switching timing of the connection scheme in FIG. 34.
[FIG. 36] is a graph showing the change over time in the battery current and the saw blade rotational speed in the automatic switching mode of the work machine 1, in the case where the pressing load of the work machine 1 against the counter material is suddenly increased to 120 N or more during operation in delta connection.
[FIG. 37] is a graph enlarging the vicinity of the switching timing of the connection scheme in FIG. 36.
[FIG. 38] is a graph showing the change over time in the battery current and the saw blade rotational speed in the tenacity mode of the work machine 1, in the case where the pressing load of the work machine 1 against the counter material is set to 110 N or less.
[FIG. 39] is a graph showing the change over time in the battery current and the saw blade rotational speed in the tenacity mode of the work machine 1, in the case where the pressing load of the work machine 1 against the counter material is suddenly increased to 120 N or more during operation in delta connection.
[FIG. 40] is a circuit block diagram of the work machine 2 according to the third embodiment of the present invention.
[FIG. 41] is a graph showing the change over time in the battery current and the saw blade rotational speed in the automatic switching mode of the work machine 2, in the case where the pressing load of the work machine 1 against the counter material is suddenly increased to 120 N or more during operation in delta connection.
[FIG. 42] is a circuit block diagram of the work machine 3 according to the fourth embodiment of the present invention.
[FIG. 43](A) is a table summarizing the winding switching condition in the work machine 3. (B) is a table summarizing the overcurrent protection activation condition in the work machine 3.
[FIG. 44] is a graph showing the relationship between the current range and the time threshold value shown in FIG. 43(A) and (B).
[FIG. 45](A) is a table summarizing the winding switching condition when the circuit of the work machine 3 is at a low temperature. (B) is a table summarizing the winding switching condition when the circuit of the work machine 3 is at a high temperature.
[FIG. 46] is a graph showing the relationship between the current range and the time threshold value shown in FIG. 45(A) and (B).
[FIG. 47](A) is a table summarizing the winding switching condition in the case where the rated capacity of the battery pack 307 of the work machine 3 is 2.5 Ah (low capacity). (B) is a table summarizing the winding switching condition in the case where the rated capacity of the battery pack 307 is 4.0 Ah (high capacity).
[FIG. 48] is a graph showing the relationship between the current range and the time threshold value shown in FIG. 47(A) and (B).
[FIG. 49] is a graph showing the relationship between the current range and the time threshold value in each of the winding switching condition and the overcurrent protection activation condition in regard to the work machine of the fifth embodiment of the present invention.
[FIG. 50] is a circuit block diagram of the work machine 4 according to the sixth embodiment of the present invention.
[FIG. 51] is a flowchart showing the first control example of the work machine 4.
[FIG. 52](A) is a flowchart showing the second control example of the work machine 4. (B) is a flowchart showing the third control example of the work machine 4. (C) is a flowchart showing the fourth control example of the work machine 4.
[FIG. 53] is a time chart of the first action example of the work machine 4, including the action of switching the coil connection from delta connection for high speed rotation to Y connection for high torque in response to an increase in the work load.
[FIG. 54] is a time chart of the second action example of the work machine 4, including the action corresponding to the control in S9 to S17 of FIG. 51.
[FIG. 55] is a time chart of the third action example of the work machine 4.
[FIG. 56] is a time chart of the fourth action example of the work machine 4, including the action corresponding to the control in S9 to S61 of FIG. 52(B).
[FIG. 57] is a time chart of the fifth action example of the work machine 4, including the action corresponding to the control in S9 and S71 of FIG. 52(C).
[FIG. 58] is a perspective view of the work machine 5 according to the seventh embodiment of the present invention as viewed from above.
[FIG. 59] is a perspective view of the work machine 5 as viewed from above with a part of the housing 1320 removed.
[FIG. 60] is a front view of the work machine 5.
[FIG. 61] is a side view of the work machine 5 as viewed from a side with a part of the housing 1320 removed.
[FIG. 62] is a perspective view showing a state where the motor housing 1321 and the control board 1311 are removed in FIG. 59.

### DESCRIPTION OF EMBODIMENTS

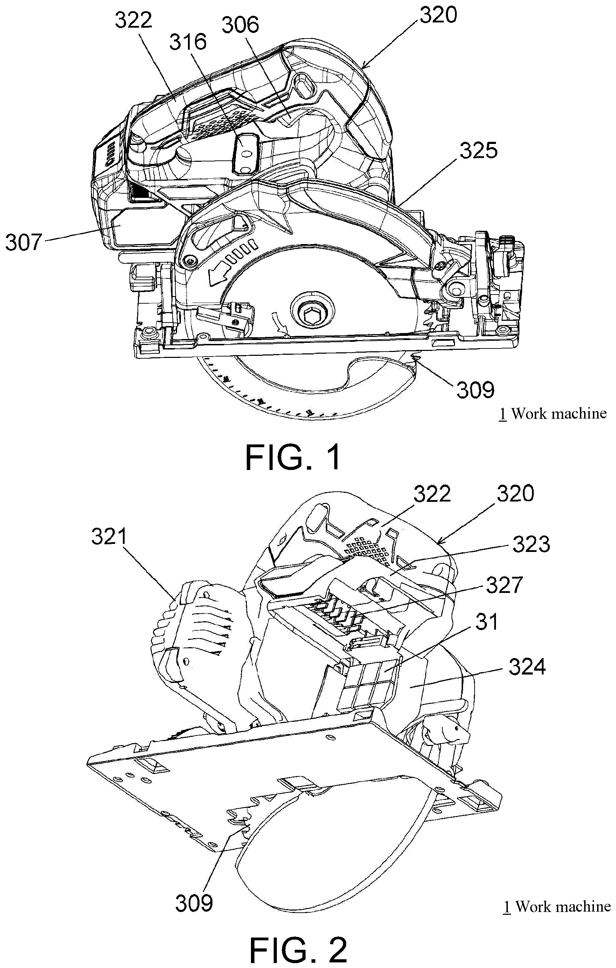

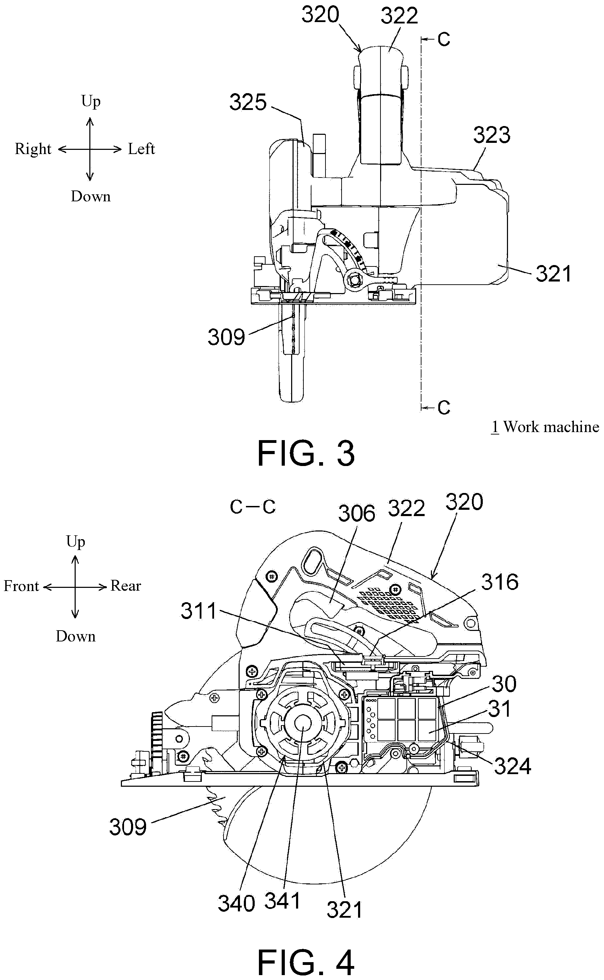

(First embodiment) FIG. 1 to FIG. 24 relate to a work machine 1 according to the first embodiment of the present invention. FIG. 3 and FIG. 4 define the mutually orthogonal front-rear, up-down, and left-right directions of the work machine 1. The left-right direction is a direction parallel to the axial direction of a motor shaft 341 of the work machine 1. The work machine 1 is a portable circular saw. The work machine 1 includes a housing 320.

The housing 320 is, for example, a resin molded body, and includes a motor housing 321 that houses a motor 340, etc., a handle housing 322 that is gripped by the operator, a battery mounting portion 323, and an intermediate housing 324.

The motor housing 321 is a cylindrical portion whose central axis is substantially parallel to the left-right direction. The handle housing 322 extends obliquely in the front-rear and up-down directions above the right portion of the motor housing 321. A trigger switch 306 is provided at the upper end portion of the handle housing 322 as an operation unit for the user to instruct start and stop of the motor 340.

A gear case (saw cover) 325 made of metal is connected to the left side of the handle housing 322. The gear case 325 houses a reduction mechanism (not shown) and covers the upper half of a saw blade 309 serving as a tip tool.

The battery mounting portion 323 extends to the left from the rear end portion of the handle housing 322, and allows a battery pack 307 to be detachably mounted thereto. The work machine 1 uses the battery pack 307 as a power supply and operates on the power of the battery pack 307. The work machine 1 has an operation panel 316 on the upper surface of the battery mounting portion 323. The user switches the action mode of the work machine 1 by the operation panel 316.

The intermediate housing 324 is located rearward of the motor housing 321, to the side (right) of the battery mounting portion 323 and below the handle housing 322.

The work machine 1 has the motor 340 inside the motor housing 321. The rotation of the motor 340 is reduced in speed by the reduction mechanism in the gear case 325 and transmitted to the saw blade 309.

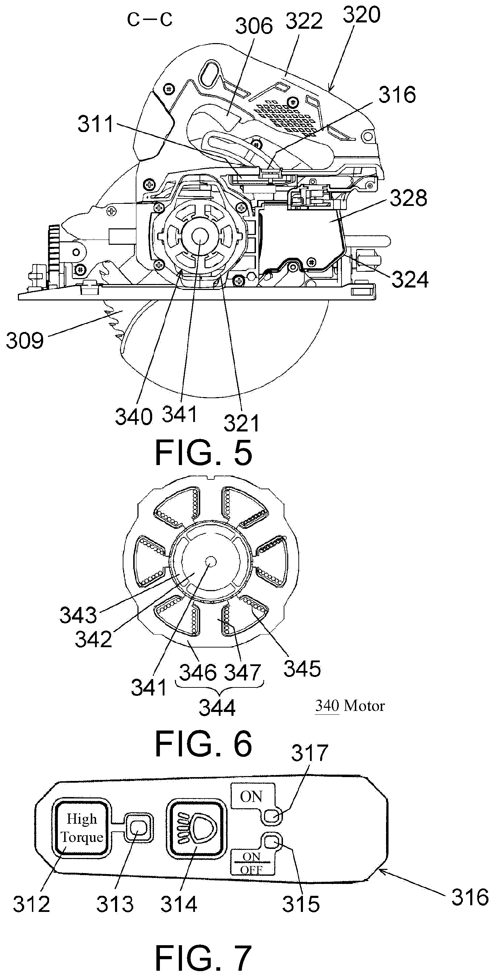

The motor 340 is an inner rotor type brushless motor. As shown in FIG. 6, the motor 340 includes the motor shaft 341 (output shaft), a rotor core 342, a rotor magnet 343 (permanent magnet), a stator core 344, and a stator coil 345.

The rotor core 342 is provided around the motor shaft 341 and rotates integrally with the motor shaft 341 relative to the stator core 344. There are four rotor magnets 343, which are inserted and held in the rotor core 342 at 90 degree intervals in the circumferential direction. The rotor core 342 and the rotor magnets 343 form the rotor of the motor 340.

The stator core 344 is provided to surround the outer periphery of the rotor core 342. The stator core 344 includes a cylindrical (annular) yoke portion 346 and six teeth 347 (tooth portions) protruding radially inward from the yoke portion 346. The stator coil 345 is provided on each tooth 347. Each tooth 347 defines a winding slot. The stator core 344 and the stator coil 345 form a stator of the motor 340. The stator coil 345 forms a plurality of windings of the motor 340.

The work machine 1 has a control board 311 (FIG. 5) and a plurality of battery connection terminals 327 (FIG. 2) inside the battery mounting portion 323. The plurality of battery connection terminals 327 face below the battery mounting portion 323. The plurality of battery connection terminals 327 come into contact with and are electrically connected to the terminals of the battery pack 307 mounted to the battery mounting portion 323.

As shown in FIG. 4, the work machine 1 has a relay board 30 inside the intermediate housing 324. The relay board 30 has a plurality of relay elements 31 mounted thereon. The plurality of relay elements 31 form a relay unit. The plurality of relay elements 31 are examples of a connection switching unit that is capable of switching a connection scheme of the stator coil 345 (hereinafter referred to as "coil connection scheme") between a first connection scheme for high speed rotation and a second connection scheme for high torque, that is, a connection switching unit that is configured to be capable of switching between a high rotational speed connection state where the plurality of windings are connected to each other to provide a high rotational speed characteristic which is a characteristic that the rotational speed is higher than other characteristics, and a high torque connection state where the plurality of windings are connected to each other to provide a high torque characteristic which is a characteristic that the torque is higher than other characteristics.

The relay board 30 is attached to the intermediate housing 324 by screws or the like. The intermediate housing 324 is open to the left. This opening is covered by the battery pack 307 mounted to the battery mounting portion 323. As shown in FIG. 5, a cover member 328 is attached to this opening by screws or latches. Covering the opening with the cover member 328 prevents the relay board 30 from falling off and provides waterproofing and dustproofing.

As shown in FIG. 7, the operation panel 316 is provided with an operation mode switching switch 312, an operation mode display LED 313, a light mode switching switch 314, and light mode display LEDs 315 and 317.

The operation mode switching switch 312 is an operation mode switching unit (mode selection unit) that enables the operator to switch the operation mode of the work machine 1 between an automatic switching mode (first mode) and a tenacity mode (second mode). The operation mode display LED 313 is an operation mode display unit that displays the current operation mode, and for example, is turned off in the automatic switching mode and is turned on in the tenacity mode.

The light mode switching switch 314 is a light mode switching unit that enables the operator to switch the light modes of the work machine 1. The light modes include, for example, a constant lighting mode, and a trigger operation lighting mode in which the light is turned on only when the trigger switch 306 is pulled. The light mode display LED 315 is turned on in the case of the trigger operation lighting mode and is turned off in the case of the constant lighting mode. The light mode display LED 317 is turned on in the case of the constant lighting mode and is turned off in the case of the trigger operation lighting mode.

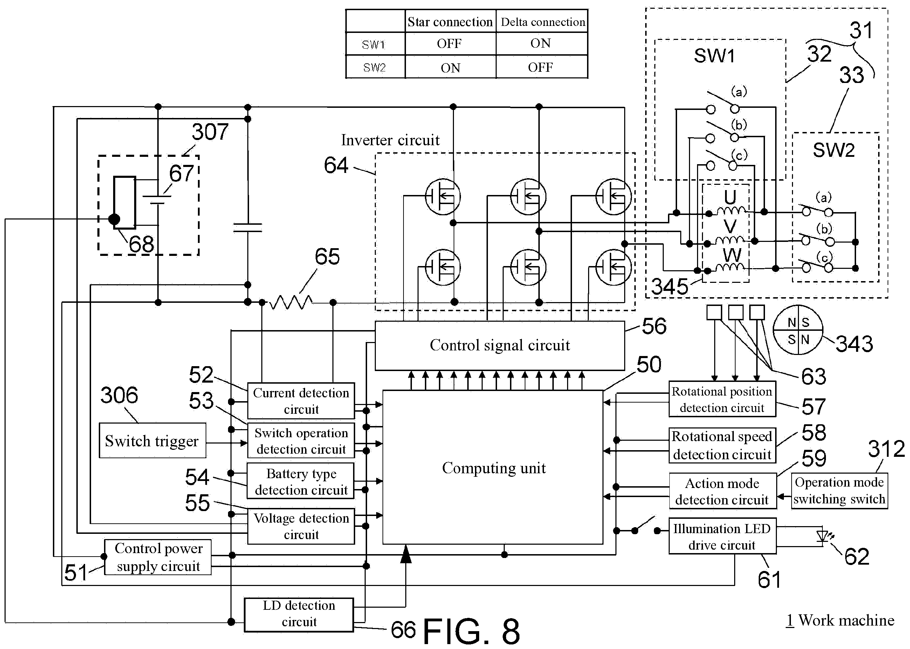

FIG. 8 is a circuit block diagram of the work machine 1.

The battery pack 307 includes a battery cell 67 and a protection IC 68. The protection IC 68 functions as a battery-side controller, and outputs a discharge stop signal (LD signal) when the discharge current from the battery cell 67 exceeds a battery-side overcurrent protection threshold value.

An inverter circuit 64 is composed of six switching elements connected in a three-phase bridge configuration, and is a drive unit that drives the motor 340. Each switching element of the inverter circuit 64 is an example of a heating element that forms the work machine 1. The inverter circuit 64 is provided between the output terminals of the battery pack 307. A detection resistor 65 is provided in the path of the current (hereinafter referred to as "motor current") flowing through the stator coil 345. The inverter circuit 64 is mounted on the control board 311.

A control power supply circuit 51 converts the output voltage of the battery pack 307 into a power supply voltage for a computing unit 50, etc., and supplies the same to the computing unit 50, etc. A current detection circuit 52 detects the motor current based on the voltage across the detection resistor 65, and transmits the same to the computing unit 50 serving as a controller. A switch operation detection circuit 53 detects the operation of the trigger switch 306, and transmits the same to the computing unit 50. A battery type detection circuit 54 detects the type (rated voltage, rated capacity, etc.) of the battery pack 307 based on the voltage of an identification terminal (not shown) of the battery pack 307, and transmits the same to the computing unit 50. The battery type detection circuit 54 forms a detection unit that detects the capacity of the power supply. A voltage detection circuit 55 detects the output voltage (hereinafter referred to as "battery voltage") of the battery pack 307, and transmits the same to the computing unit 50.

A LD detection circuit 66 detects the discharge stop signal (LD signal) from the battery pack 307, and transmits the same to the computing unit 50. Each circuit such as the control power supply circuit 51 and the computing unit 50 are mounted on the control board 311.

A control signal circuit 56 outputs the control signal that controls the on/off of each switching element of the inverter circuit 64 under the control of the computing unit 50. A rotational position detection circuit 57 detects the rotational position of the motor 340 based on the output signal from a Hall IC (magnetic sensor) 63 provided in the vicinity of the rotor magnet 343, and transmits the same to the computing unit 50. A rotational speed detection circuit 58 detects the rotational speed (hereinafter referred to as "motor rotational speed") of the motor 340 based on the output signal of the rotational position detection circuit 57, and transmits the same to the computing unit 50. In this specification, the term "rotational speed" refers to the number of rotations per unit time, and means the speed of rotation. An action mode detection circuit 59 detects the operation mode (action mode) according to the operation of the operation mode switching switch 312 performed by the user, and transmits the same to the computing unit 50. An illumination LED drive circuit 61 drives an illumination LED 62 under the control of the computing unit 50.

The computing unit 50 includes a microcontroller or the like, and is a controller that controls the overall action of the work machine 1. The computing unit 50 controls the driving of the inverter circuit 64 via the control signal circuit 56 (for example, PWM control of each switching element of the inverter circuit 64), and controls the drive current supplied to the stator coil 345. The computing unit 50 can detect the torque of the motor 340 (hereinafter referred to as "motor torque"), that is, the load applied to the motor 340 (hereinafter referred to as "work load"), based on the motor current.

The computing unit 50 controls the relay element 31 to switch the coil connection scheme (coil connection) between delta connection for high speed rotation and star connection (Y connection) for high torque. The state where the coil connection scheme is delta connection corresponds to the high rotational speed connection state, and the state where the coil connection scheme is star connection corresponds to the high torque connection state. The computing unit 50 is capable of executing connection switching control for switching the coil connection scheme from delta connection to star connection, that is, connection switching control for switching from the high rotational speed connection state to the high torque connection state.

The plurality of relay elements 31 include three delta connection relay elements 32 as a first relay unit, and three star connection relay elements 33 as a second relay unit. The computing unit 50 sets the coil connection scheme to delta connection by turning on the delta connection relay elements 32 and turning off the star connection relay elements 33, and sets the coil connection scheme to star connection by turning on the star connection relay elements 33 and turning off the delta connection relay elements 32. The number of star connection relay elements 33 may be two. That is, one of the three star connection relay elements 33 may be replaced with a short circuit.

The operation modes of the work machine 1 (control modes performed by the computing unit 50) include an automatic switching mode (first mode) and a tenacity mode (second mode). As described above, the operator can select the operation mode by the operation mode switching switch 312.

In the automatic switching mode (first mode), the computing unit 50 switches the coil connection scheme from delta connection (first connection scheme) for high speed rotation to star connection (second connection scheme) for high torque in response to an increase in the work load. That is, in the automatic switching mode, the computing unit 50 is configured to control the plurality of relay elements 31 so as to switch the coil connection scheme from a high speed rotation mode to a high torque mode when the work load increases.

In the tenacity mode (second mode), the computing unit 50 does not switch the coil connection scheme from high speed rotation to high torque regardless of an increase in the work load. Specifically, in the tenacity mode, the computing unit 50 fixes the coil connection scheme to star connection for high torque, and does not switch the coil connection scheme regardless of the work load. The work load is the load applied to the motor 340 by the work, that is, the load applied to the motor 340 by the rotating saw blade 309 being pressed against the counter material, and does not include the temporary high load caused by starting the motor 340. That is, in the tenacity mode, the computing unit 50 maintains the connection scheme as the second connection scheme.

In the following, the automatic switching mode will be described in this embodiment.

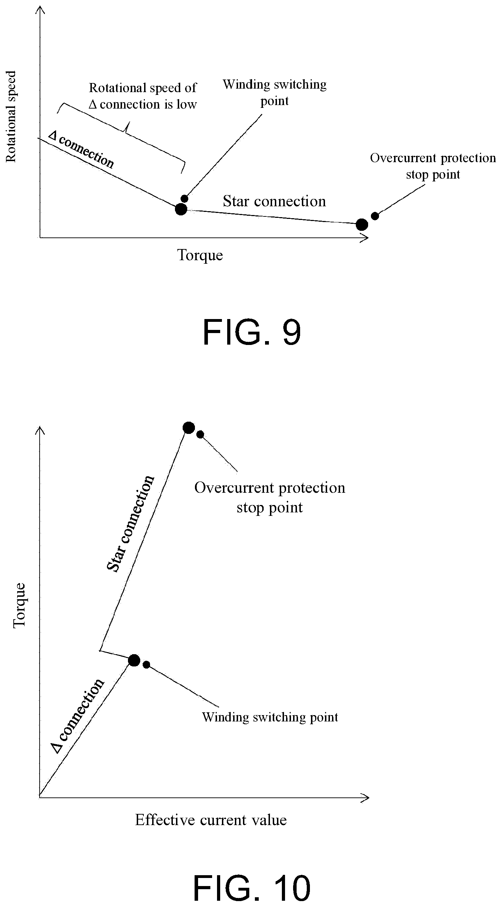

FIG. 9 is a graph showing the relationship between the motor torque on the horizontal axis and the motor rotational speed on the vertical axis, and shows the relationship between the motor torque and the motor rotational speed in the case where the motor 340 is of low speed rotation specifications. FIG. 10 is a graph showing the relationship between the effective value of the motor current on the horizontal axis and the motor torque on the vertical axis. In the case where the motor 340 is of low speed rotation specifications, delta connection is switched to star connection at the intersection point (winding switching point in FIG. 9) between the characteristic line of delta connection and the characteristic line of star connection. Since the effective value of the motor current at the torque of the intersection point is smaller than the threshold value of overcurrent protection, the overcurrent protection is not activated before the connection switching. However, the motor rotational speed is low, which causes the problem of a slow working speed.

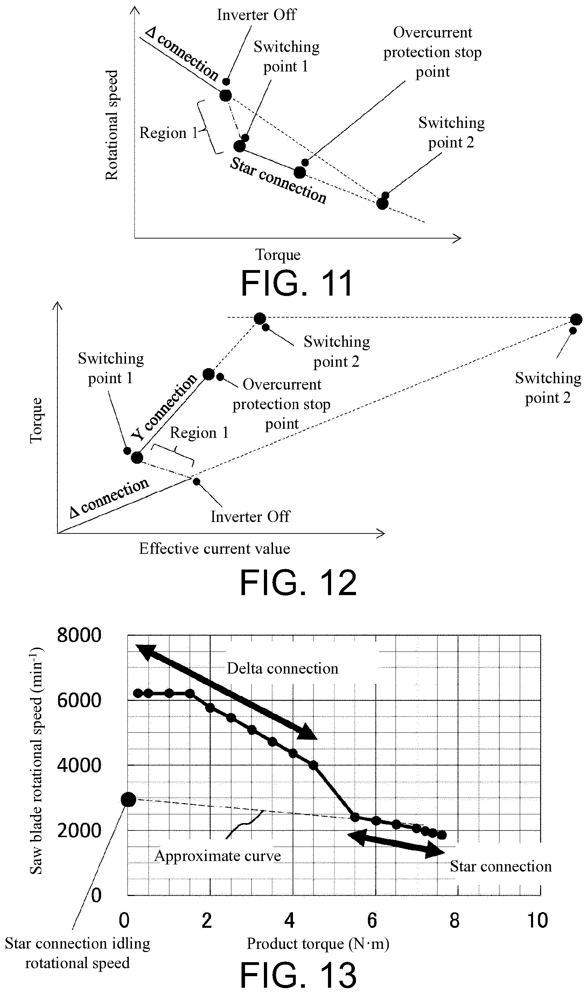

FIG. 11 and FIG. 12 respectively show the relationship between the motor torque and the motor rotational speed in the case where the motor 340 is of high speed rotation specifications suitable for high speed rotation, and the relationship between the effective value of the motor current and the motor torque. By reducing the number of turns of the stator coil 345, the motor 340 can have high speed rotation specifications, thereby improving the working speed. On the other hand, in the case of high speed rotation specifications, if the torque is the same, the motor current increases significantly compared to the case of low speed rotation specifications, and the effective value of the motor current at the intersection point between the characteristic line of delta connection and the characteristic line of star connection becomes greater than the threshold value of overcurrent protection. Therefore, in the case of high speed rotation specifications, it is difficult to switch from delta connection to star connection at the intersection point (switching point 2 in FIG. 11) between the characteristic line of delta connection and the characteristic line of star connection. Therefore, in the case of high speed rotation specifications, the switch from delta connection to star connection is performed at a switching point 1 where the torque is lower than the intersection point between the characteristic line of delta connection and the characteristic line of star connection. The time from the start to the completion of the connection switching is very short, for example, 100 ms or less, and it is important from the viewpoint of working feeling that the timing of switching on/off of the relay element 31 and the inverter circuit 64 during this time is appropriate. This point will be discussed later.

FIG. 13 is a graph showing the relationship between the product torque of the work machine 1 (torque of the saw blade 309) on the horizontal axis and the rotational speed of the saw blade 309 (saw blade rotational speed) on the vertical axis. FIG. 13 shows an example in which the motor 340 is controlled to a constant speed in the low torque region, and the saw blade rotational speed is constant in the low torque region. Such a graph showing the relationship between the torque and the rotational speed of the tip tool can be obtained by the following experiment. That is, a load device is connected to the output shaft that holds the tip tool, and the rotational speed and the torque of the output shaft are measured while gradually increasing the load torque generated by the load device from a state of zero. The result is output as a graph with the torque of the output shaft on the horizontal axis and the rotational speed of the output shaft on the vertical axis. In addition, in many work machines, the motor and the output shaft that holds the tip tool are connected via a reduction mechanism, so the torque and the rotational speed of the motor can be calculated from the torque and the rotational speed of the output shaft that holds the tip tool and the reduction ratio of the reduction mechanism. Thus, it is also possible to obtain a graph showing the relationship between the torque and the rotational speed of the motor through an experiment similar to that described above.

An idling rotational speed of the saw blade 309 during star connection shown in FIG. 13 is the idling rotational speed of the saw blade 309 in the case where it is assumed that the inverter circuit 64 is controlled at a duty of 100% in an idling state and in a state of star connection, and is the saw blade rotational speed indicated by the intersection point between an extension line (approximate curve) of the characteristic line of star connection in FIG. 13 and a straight line with a torque of 0 (about 3,000 min⁻¹, as an example). The motor rotational speed corresponding to the idling rotational speed of the saw blade 309 in star connection is the idling rotational speed of the motor 340 in star connection (hereinafter referred to as "star connection idling rotational speed"). In the work machine 1, the computing unit 50 starts connection switching control for switching the coil connection scheme from delta connection to star connection in a state where the coil connection scheme is delta connection and the motor rotational speed is higher than the star connection idling rotational speed. Thus, while the motor 340 is set to high speed rotation specifications compared to the case where connection switching control is started in a state where the motor rotational speed is lower than the star connection idling rotational speed, the motor 340 can be prevented from stopping due to overcurrent protection before connection switching control is started. In order to increase the working speed while the load torque is increasing, it is desirable to complete the started connection switching control as quickly as possible and resume the driving of the motor. Thus, in the case where connection switching control is started in a state where the motor rotational speed is higher than the star connection idling rotational speed, from the viewpoint of increasing the working speed, it is natural to attempt to complete connection switching control when the motor rotational speed is higher than the star connection idling rotational speed. However, while the computing unit 50 is executing connection switching control, the motor 340 is rotating idly and generates a back electromotive voltage. From the viewpoint of suppressing the back electromotive voltage of the motor 340, it is important whether the motor rotational speed at the time when the connection switching control is completed is equal to or lower than the star connection idling rotational speed. This point will be described below.

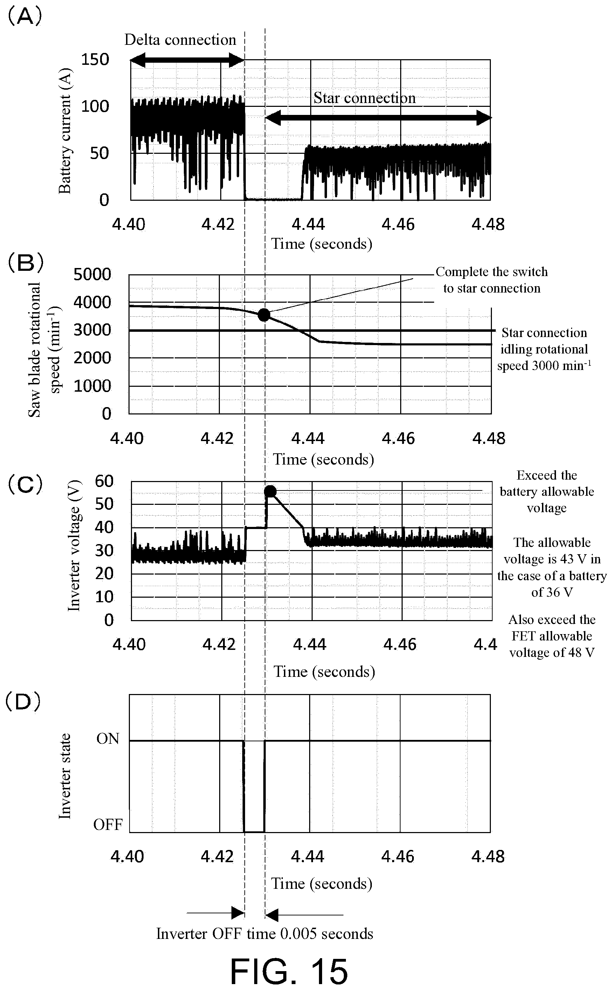

FIG. 14(A) to (C) are graphs respectively showing an example of the change over time in the current flowing through the battery pack 307 (hereinafter referred to as "battery current"), the saw blade rotational speed, and the voltage between the input terminals of the inverter circuit 64 (hereinafter referred to as "inverter voltage") in the case where first control is performed to complete the switch from delta connection to star connection in a state where the motor rotational speed is higher than the star connection idling rotational speed. FIG. 15(A) to (C) are graphs enlarging the vicinity of the connection switching timing in FIG. 14(A) to (C), respectively. FIG. 15(D) is a graph showing the on/off of the inverter circuit 64 on the same time scale as FIG. 15(A) to (C).

In the case of the first control, the connection switching control is completed while the motor rotational speed is higher than the star connection idling rotational speed, and the current path of star connection is turned on, so at the timing of completion of the connection switching control, the inverter voltage jumps up due to the back electromotive voltage of the motor 340 and exceeds the allowable voltage between the positive and negative electrodes of the battery pack 307 (for example, 43 V in the case of a rated voltage of 36 V) and the allowable voltage of each switching element of the inverter circuit 64 (for example, 48 V). For this reason, there is room for improvement in the first control in terms of suppressing the back electromotive voltage of the motor 340.

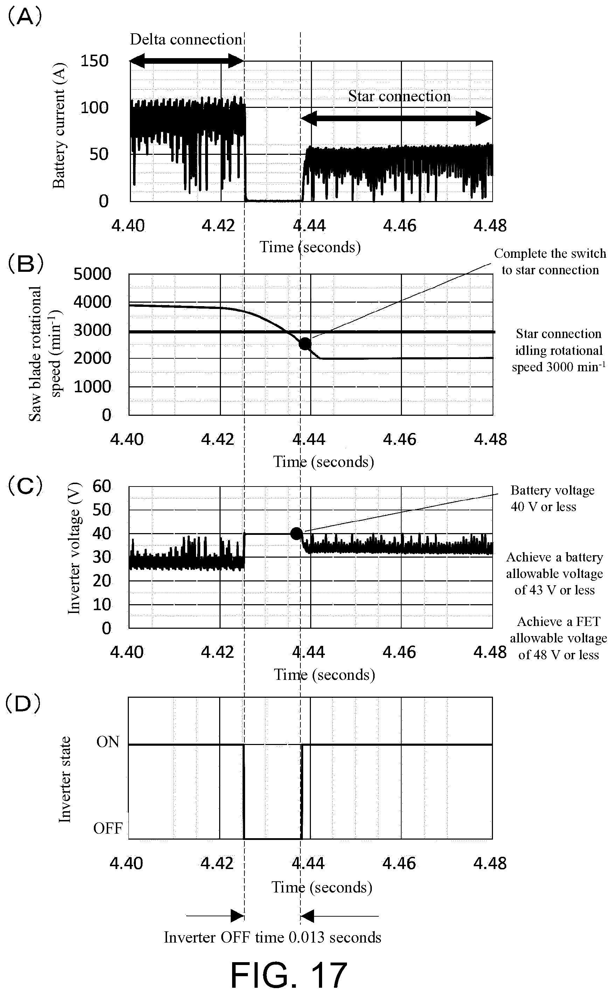

FIG. 16(A) to (C) are graphs respectively showing an example of the change over time of the battery current, the saw blade rotational speed, and the inverter voltage in the case where second control is performed to complete the switch from delta connection to star connection after the motor rotational speed becomes equal to or lower than the star connection idling rotational speed. FIG. 17(A) to (C) are graphs enlarging the vicinity of the connection switching timing in FIG. 16(A) to (C), respectively. FIG. 17(D) is a graph showing the on/off of the inverter circuit 64 on the same time scale as FIG. 17(A) to (C).

In the case of the second control, the connection switching control is completed while the motor rotational speed is equal to or lower than the star connection idling rotational speed, and the current path of star connection is turned on, so the inverter voltage is prevented from rising due to the back electromotive voltage of the motor 340 at the timing of completion of the connection switching control. This reduces the risk that the inverter voltage exceeds the allowable voltage between the positive and negative electrodes of the battery pack 307 and the allowable voltage of each switching element of the inverter circuit 64.

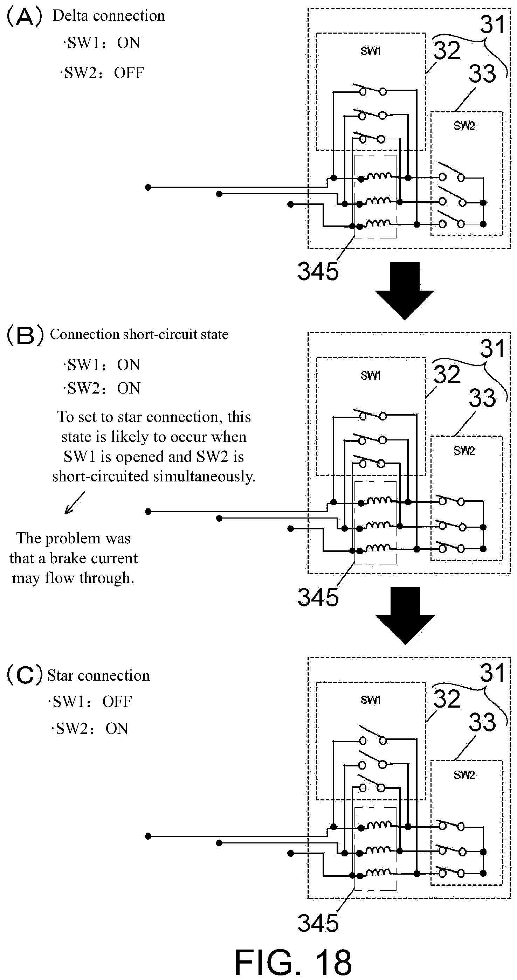

FIG. 18(A) to (C) are diagrams showing the change over time in the on/off of the delta connection relay element 32 and the star connection relay element 33 in the case of instructing to turn off the delta connection relay element 32 and turn on the star connection relay element 33 simultaneously in the connection switching control.

In the case of instructing to turn off the delta connection relay element 32 and turn on the star connection relay element 33 simultaneously, a temporary connection short-circuit state (a state where the delta connection relay element 32 and the star connection relay element 33 are both on) shown in FIG. 18(B) is likely to occur in the process of changing from the state shown in FIG. 18(A) (a state where the delta connection relay element 32 is on and the star connection relay element 33 is off) to the state shown in FIG. 18(C) (a state where the delta connection relay element 32 is off and the star connection relay element 33 is on).

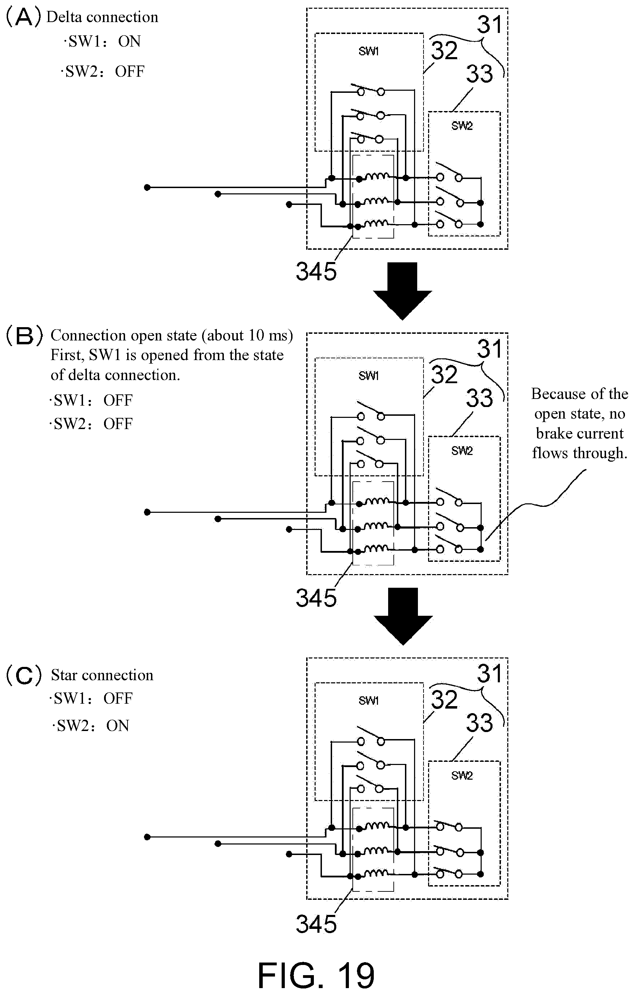

In the connection short-circuit state, the back electromotive voltage generated in the stator coil 345 causes a brake current to flow in a closed loop including the delta connection relay element 32, the star connection relay element 33, and the stator coil 345, and the motor rotational speed decreases unnecessarily. In addition, since the brake current flows through the star connection relay element 33 the moment the star connection relay element 33 is turned on, there is a high risk of damaging the star connection relay element 33. The control for solving such a problem is shown in FIG. 19(A) to (C).

FIG. 19(A) to (C) are diagrams showing the change over time in the on/off of the delta connection relay element 32 and the star connection relay element 33 in the case of instructing to turn off the delta connection relay element 32 and then instructing to turn on the star connection relay element 33 after a waiting time in the connection switching control.

In the case of instructing to turn off the delta connection relay element 32 and then instructing to turn on the star connection relay element 33 after a waiting time, there is a temporary connection open state (a state where the delta connection relay element 32 and the star connection relay element 33 are both off) shown in FIG. 19(B) in the process of changing from the state shown in FIG. 19(A) (a state where the delta connection relay element 32 is on and the star connection relay element 33 is off) to the state shown in FIG. 19(C) (a state where the delta connection relay element 32 is off and the star connection relay element 33 is on). The connection open state corresponds to a connection terminated state.

In the connection open state, there is no closed loop through which a brake current flows due to the back electromotive voltage generated in the stator coil 345. This reduces the risk of a decrease in the motor rotational speed and damage to the star connection relay element 33. The time of the connection open state is, for example, about 10 ms.

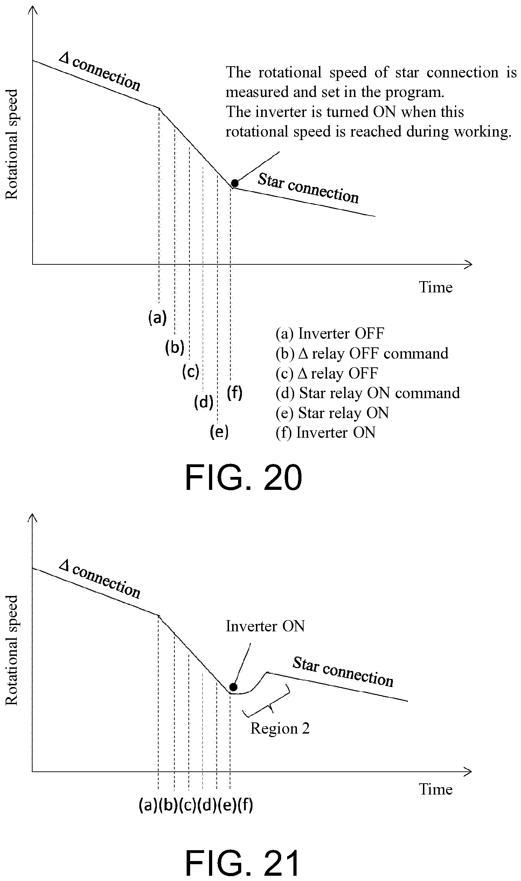

FIG. 20 is a simplified graph showing an example of the change over time in the expected motor rotational speed in the case where the work load is increased, and is a simplified graph showing an example of the expected change over time in the motor rotational speed in the case where third control is performed to complete (end) the connection switching control at the timing when the motor rotational speed drops to the expected rotational speed in star connection. The expected rotational speed is, for example, 9,000 min⁻¹ and is determined experimentally.

In FIG. 20, the horizontal axis indicates time, and the period of times (a) to (f) indicates the period from start to completion of the connection switching control. Time (a) is the drive stop time of the inverter circuit 64. The driving of the inverter circuit 64 is stopped by turning off each switching element of the inverter circuit 64 and switching the inverter circuit 64 to a drive stop state in which the supply of drive power to the motor 340 is stopped. Time (b) is the time when an off command is issued from the computing unit 50 to the delta connection relay element 32. Time (c) is the time when the delta connection relay element 32 is actually turned off. Time (d) is the time when an on command is issued from the computing unit 50 to the star connection relay element 33. Time (e) is the time when the star connection relay element 33 is actually turned on. Time (f) is the drive restart time of the inverter circuit 64. The same applies to times (a) to (f) in FIG. 21 to FIG. 23. In addition, since the inverter circuit 64 is formed by semiconductor switching elements and responds faster to drive/stop commands from the computing unit 50 than relay elements, the time lag from the drive/stop commands to the response is ignored.

As assumed in FIG. 20, the motor rotational speed decreases in response to an increase in the work load in the delta connection state until time (a), then the motor rotational speed drops sharply during the period of connection switching control from times (a) to (f), and from time (f) onward, the motor rotational speed decreases in response to an increase in the work load in the star connection state.

FIG. 21 is a simplified graph showing an example of the change over time in the actual motor rotational speed in the case where the third control is performed. What differs from the assumption in FIG. 20 is that there exists a region 2 in which the motor rotational speed increases after time (f). The change in the rotational speed in the region 2 leads to deterioration of the working feeling. For example, if the torque vs. motor rotational speed characteristic line deviates upward from the expected position due to variation in the torque vs. motor rotational speed characteristics in the star connection of the motor 340, a large increase in the motor rotational speed in the region 2 occurs. The variation in the torque vs. motor rotational speed characteristics is caused by variation in the magnetic force of the rotor magnet 343, the mechanical loss in the mechanism, or the like. In FIG. 21, when an extension line of the characteristic line of the star connection shown in the figure is drawn, the inverter circuit 64 resumes driving at a rotational speed lower than this characteristic line (extension line).

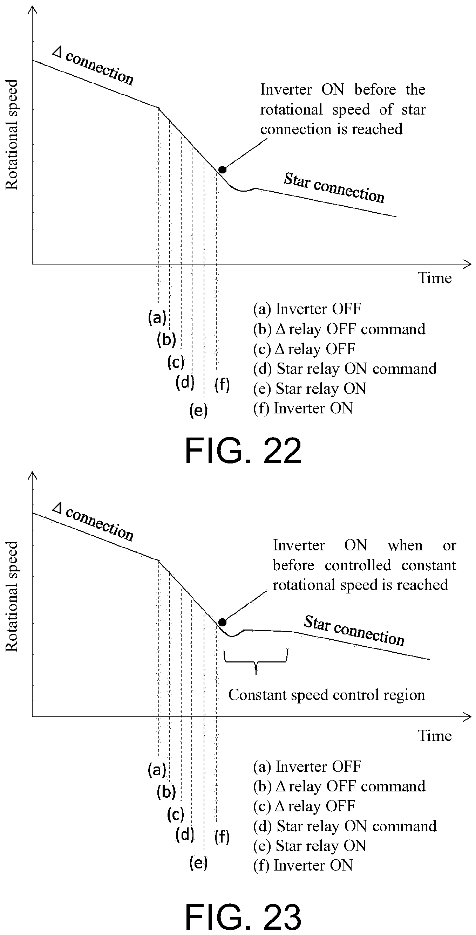

FIG. 22 is a simplified graph showing an example of the change over time in the actual motor rotational speed in the case where fourth control is performed to complete (end) the connection switching control before the motor rotational speed drops to the expected rotational speed in star connection. In the work machine 1, as an example, the inverter circuit 64 is turned on at the timing when the saw blade rotational speed becomes equal to or lower than 2,500 min⁻¹ (the motor rotational speed becomes equal to or lower than 10,000 min⁻¹). According to the fourth control, even if the torque vs. motor rotational speed characteristic line in the star connection of the motor 340 deviates upward from the expected position, the change in the rotational speed during the increase in motor rotational speed after time (f) is suppressed compared to the third control, and deterioration of the working feeling is suppressed. In FIG. 23, when an extension line of the characteristic line of the star connection shown in the figure is drawn, the inverter circuit 64 resumes driving at a rotational speed higher than this characteristic line (extension line).

FIG. 23 is a simplified graph showing an example of the change over time in the actual motor rotational speed in the case where fifth control is performed to perform constant speed control during star connection and to complete (end) the connection switching control at the timing when the motor rotational speed drops to the rotational speed of the constant speed control in star connection. According to the fifth control, the motor rotational speed after the connection switching control becomes the set rotational speed of the constant speed control, regardless of the variation in the torque vs. motor rotational speed characteristics in the star connection of the motor 340. Therefore, even if the torque vs. motor rotational speed characteristic line in the star connection of motor 340 deviates upward from the expected position, the change in the rotational speed during the increase in motor rotational speed after time (f) is suppressed compared to the third control, and deterioration of the working feeling is suppressed.

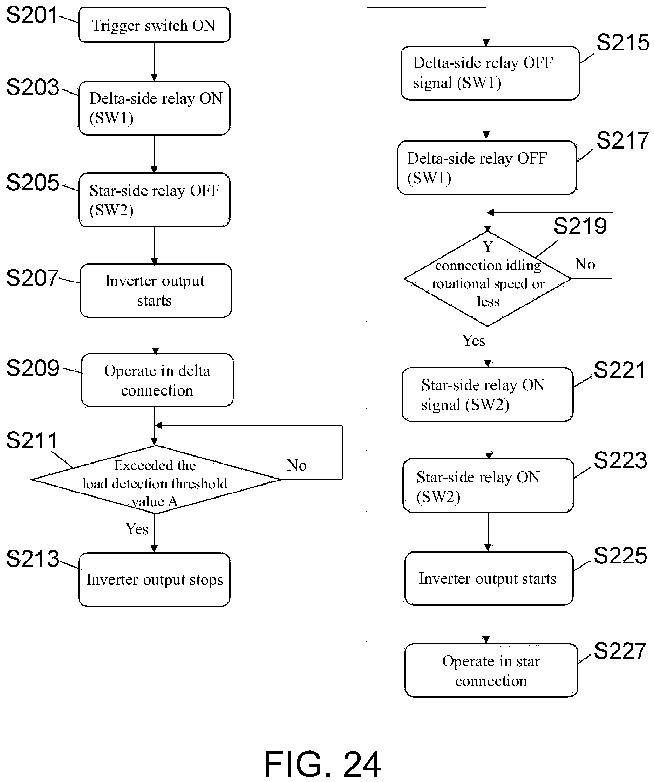

FIG. 24 is a control flowchart of the work machine 1. When the trigger switch 306 is turned on (S201), the computing unit 50 turns on the delta connection relay element 32 (S203), turns off the star connection relay element 33 (S205), starts driving the inverter circuit 64 (S207), and drives the motor 340 (operates the work machine 1) with the coil connection scheme set to delta connection (S209). If the work load does not exceed the threshold value A (No in S211), the computing unit 50 continues to drive the motor 340 in delta connection.

When the work load exceeds the threshold value A (Yes in S211), the computing unit 50 stops driving the inverter circuit 64 (S213) and sends an off signal to the delta connection relay element 32 (S215). This causes the delta connection relay element 32 to be turned off (S217). The computing unit 50 waits until the motor rotational speed becomes equal to or lower than the star connection idling rotational speed (No in S219). When the motor rotational speed becomes equal to or lower than the star connection idling rotational speed (Yes in S219), the computing unit 50 sends an on signal to the star connection relay element 33 (S221). This causes the star connection relay element 33 to be turned on (S223). The computing unit 50 resumes driving the inverter circuit 64 (S225), and drives the motor 340 with the coil connection scheme set to star connection (S227). In the case of the fifth control, the constant speed control is performed in S227.

This embodiment achieves the following effects.
(1) The computing unit 50 starts the connection switching control for switching the coil connection scheme from delta connection to star connection in a state where the motor rotational speed is higher than the star connection idling rotational speed. Therefore, compared to the case where the connection switching control is started in a state where the motor rotational speed is lower than the star connection idling rotational speed, it is possible to set the motor 340 to high speed rotation specifications and prevent the motor 340 from stopping due to overcurrent protection before the connection switching control is started.
(2) In the second control, the computing unit 50 is configured to complete the connection switching control in a state where the motor rotational speed becomes equal to or lower than the star connection idling rotational speed. Therefore, compared to the case where the switch from delta connection to star connection is completed in a state where the motor rotational speed is higher than the star connection idling rotational speed, the inverter voltage is prevented from rising due to the back electromotive voltage of the motor 340 at the timing of completion of the connection switching control. This reduces the risk of the inverter voltage exceeding the allowable voltage between the positive and negative electrodes of the battery pack 307 or the allowable voltage of each switching element of the inverter circuit 64, and occurrence of breakdowns or damage.
(3) In the connection switching control, the computing unit 50 switches the inverter circuit 64 to the drive stop state, and switches the relay element 31 to the connection open state (connection terminated state) shown in FIG. 19(B). Therefore, compared to the case of switching from a state where the delta connection relay element 32 is on and the star connection relay element 33 is off (high rotational speed connection state) to a state where the delta connection relay element 32 is off and the star connection relay element 33 is on (high torque connection state) without the connection open state (connection terminated state) in between, the risk of entering the connection short-circuit state shown in FIG. 18(B) is reduced, and the risks of a decrease in the motor rotational speed and damage to the star connection relay element 33 are reduced.
(4) In the connection switching control, the computing unit 50 is configured to switch from a state where the delta connection relay element 32 is on and the star connection relay element 33 is off (high rotational speed connection state) to a state where the delta connection relay element 32 and the star connection relay element 33 are both off (connection terminated state) when the inverter circuit 64 is in the drive stop state. Since the delta connection relay element 32 is turned off in a state where no current flows through, the risk of damage to the delta connection relay element 32 is reduced compared to the case where the delta connection relay element 32 is turned off in a state where a current is flowing through.
(5) In the connection switching control, the computing unit 50 is configured to switch from a state where the delta connection relay element 32 and the star connection relay element 33 are both off (connection terminated state) to a state where the delta connection relay element 32 is off and the star connection relay element 33 is on (high torque connection state) when the inverter circuit 64 is in the drive stop state. Thus, no current flows through the star connection relay element 33 at the moment the star connection relay element 33 is turned on, which reduces the risk of damage to the star connection relay element 33.

(Second embodiment) FIG. 1 to FIG. 8 and FIG. 25 to FIG. 41 relate to the second embodiment of the present invention. Hereinafter, description of parts shared by the first embodiment and the second embodiment will be omitted as appropriate. In this embodiment, the difference between the automatic switching mode and the tenacity mode of the work machine 1 will be mainly described.

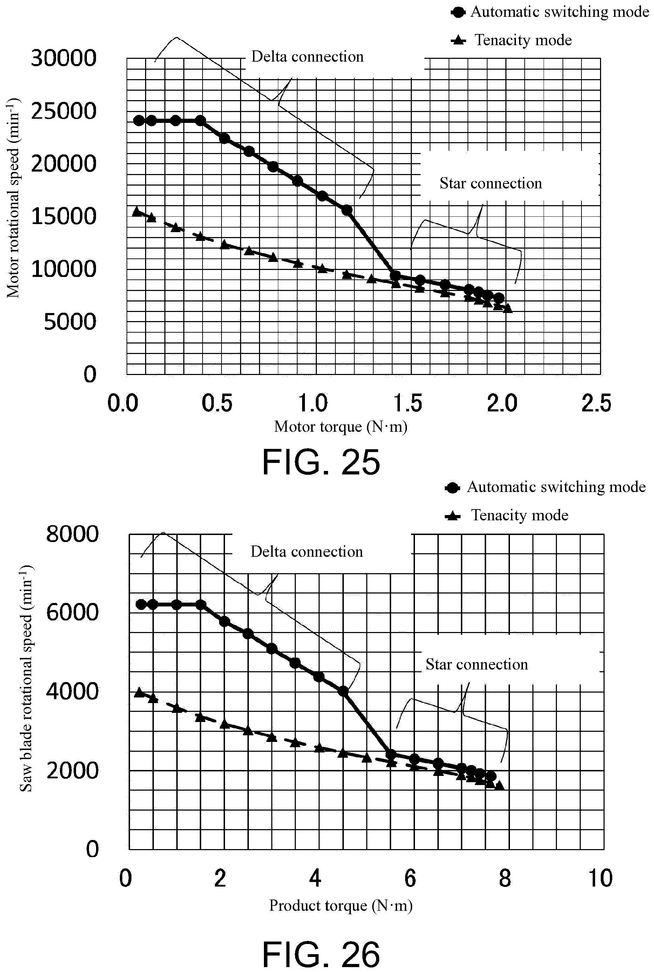

FIG. 25 is a graph showing the relationship between the motor torque and the motor rotational speed of the work machine 1, in the case where the pressing load (hereinafter referred to as "work machine pressing force") of the work machine 1 against the counter material is increased in both the automatic switching mode and the tenacity mode.

In the automatic switching mode, the computing unit 50 performs constant speed control in the range where the motor torque is 0.4 N·m or less. Therefore, in the automatic switching mode, despite an increase in the work machine pressing force, the motor rotational speed is kept constant even if the motor torque increases as long as the motor torque is within the range of 0.4 N·m or less. When the motor torque exceeds 0.4 N·m, an increase in the work machine pressing force increases the motor torque and reduces the motor rotational speed. Then, the motor rotational speed drops significantly before and after the coil connection scheme is switched from delta connection to star connection. An increase in the work machine pressing force increases the motor torque and reduces the motor rotational speed even in star connection.

In the tenacity mode, there is no constant speed control region, and when the work machine pressing force increases, the motor torque increases and the motor rotational speed decreases.

FIG. 26 is a graph showing the relationship between the saw blade torque (torque of the rotating shaft of the saw blade 309) and the saw blade rotational speed (rotational speed of the saw blade 309) of the work machine 1, in the case where the work machine pressing force is increased in both the automatic switching mode and the tenacity mode. In this embodiment, as an example, the reduction ratio of the reduction mechanism is set to 3.88, the saw blade rotational speed is 1/3.88 of the motor rotational speed, and the saw blade torque is 3.88 times the motor torque.

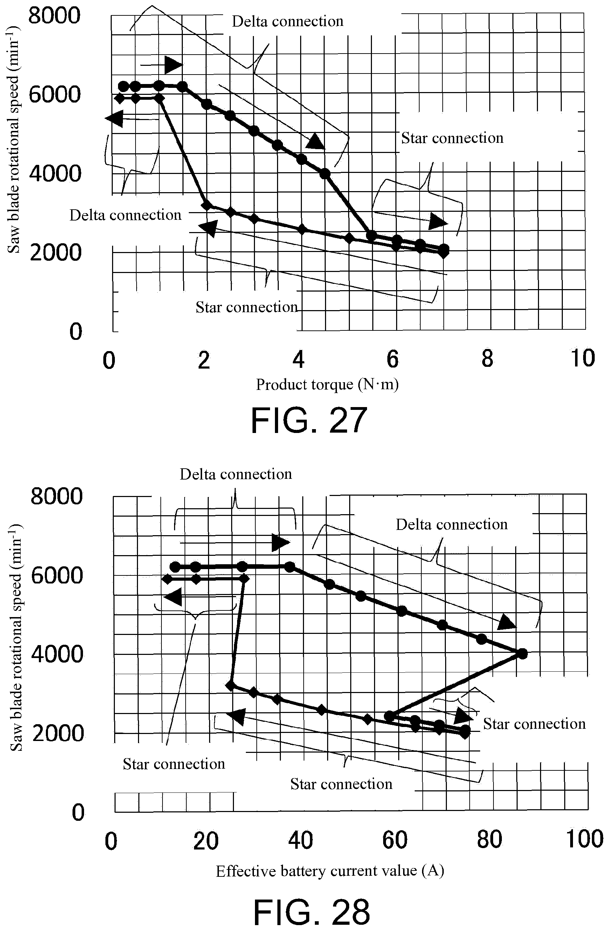

FIG. 27 is a graph showing the relationship between the saw blade torque and the saw blade rotational speed of the work machine 1, in the case where the work machine pressing force is increased and then decreased in the automatic switching mode. In the automatic switching mode, the saw blade torque (4 N·m or more) when switching the coil connection scheme from delta connection to star connection is higher than the saw blade torque (2 N·m or less) when switching the coil connection scheme from star connection to delta connection. This is to prevent frequent switching between delta connection and star connection.

FIG. 28 is a graph showing the relationship between the effective battery current value (effective value of the discharge current of the battery pack 307) and the saw blade rotational speed of the work machine 1, in the case where the work machine pressing force is increased and then decreased in the automatic switching mode. In the automatic switching mode, the effective battery current value drops suddenly when the work machine pressing force is increased and the coil connection scheme is switched from delta connection to star connection.

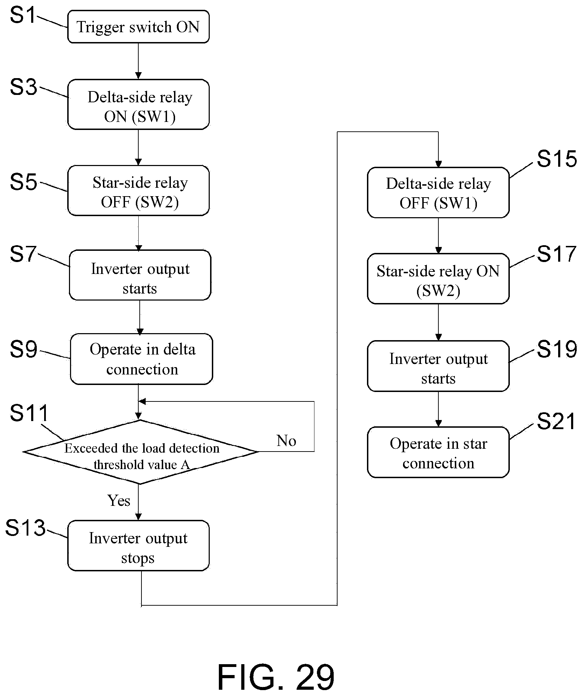

FIG. 29 is a control flowchart of the automatic switching mode of the work machine 1, in the case where the trigger switch 306 is turned on and then the work machine pressing force is increased.

When the trigger switch 306 is turned on (S1), the computing unit 50 turns on the delta connection relay element 32 (S3), turns off the star connection relay element 33 (S5), starts driving the inverter circuit 64 (S7), and drives the motor 340 (operates the work machine 1) with the coil connection scheme set to delta connection (S9). If the work load does not exceed the threshold value A (No in S11), the computing unit 50 continues to drive the motor 340 in delta connection.

When the work load exceeds the threshold value A (Yes in S11), the computing unit 50 stops driving the inverter circuit 64 (S13), turns off the delta connection relay element 32 (S15), turns on the star connection relay element 33 (S17), resumes driving the inverter circuit 64 (S19), and drives the motor 340 with the coil connection scheme set to star connection (S21). The threshold value A corresponds to the first winding switching threshold value. The effective value of the motor current corresponding to the threshold value A is, for example, 60 A. Stopping the driving of the inverter circuit 64 means to turn off all of the six switching elements that form the inverter circuit 64.

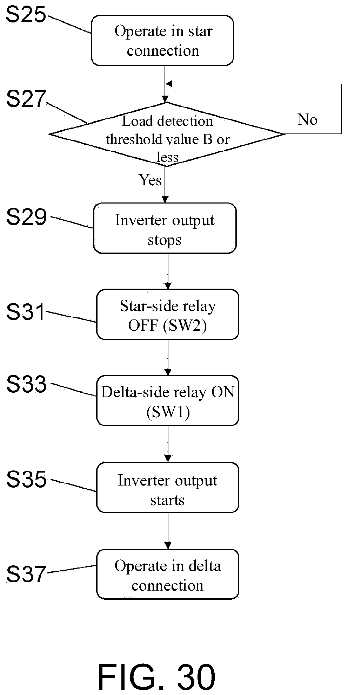

FIG. 30 is a control flowchart of the automatic switching mode of the work machine 1, in the case where the work machine pressing force is decreased during operation in star connection.

The computing unit 50 drives the motor 340 in star connection (S25), and if the work load is not equal to or smaller than the threshold value B (No in S27), continues to drive the motor 340 in star connection.

When the work load becomes equal to or smaller than the threshold value B (Yes in S27), the computing unit 50 stops driving the inverter circuit 64 (S29), turns off the star connection relay element 33 (S31), turns on the delta connection relay element 32 (S33), resumes driving the inverter circuit 64 (S35), and drives the motor 340 with the coil connection scheme set to delta connection (S37). The threshold value B corresponds to the second winding switching threshold value. The above-mentioned threshold value A is greater than the threshold value B.

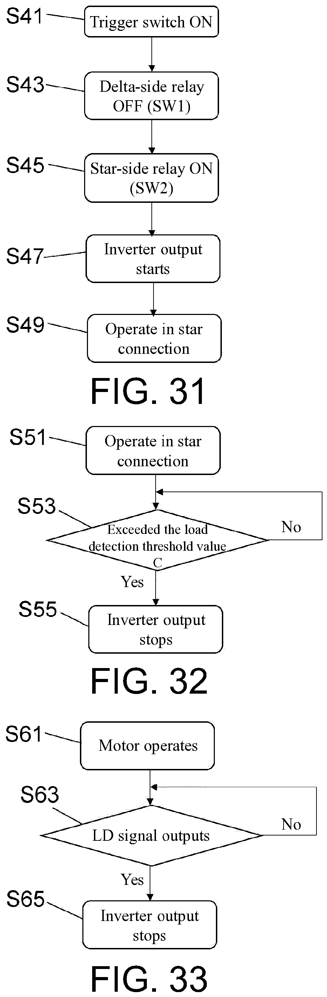

FIG. 31 is a control flowchart of the tenacity mode of the work machine 1. When the trigger switch 306 is turned on (S41), the computing unit 50 turns off the delta connection relay element 32 (S43), turns on the star connection relay element 33 (S45), starts driving the inverter circuit 64 (S47), and drives the motor 340 with the coil connection scheme set to star connection (S49).

FIG. 32 is a flowchart of the overload protection control of the work machine 1. The computing unit 50 drives the motor 340 in star connection (S51), and if the work load does not exceed the threshold value C (No in S53), continues to drive the motor 340 in star connection. When the work load exceeds the threshold value C (Yes in S53), the computing unit 50 stops driving the inverter circuit 64 to stop the motor 340 (S55). The threshold value C corresponds to the overload protection threshold value. The effective value of the motor current corresponding to the overload protection threshold value is, for example, 90 A. The above-mentioned threshold value A is equal to or smaller than the threshold value C, and is preferably equal to or greater than 2/3 of the threshold value C.

FIG. 33 is a flowchart of the protection control based on the discharge stop signal from the battery pack 307 of the work machine 1. As a premise of this flowchart, the battery pack 307 outputs the discharge stop signal (LD signal) when its own discharge current exceeds the battery-side overcurrent protection threshold value.

The computing unit 50 drives the motor 340 (S61), and if the discharge stop signal is not received from the battery pack 307 (No in S63), continues to drive the motor 340. When the computing unit 50 receives the discharge stop signal from the battery pack 307 (Yes in S63), the computing unit 50 stops driving the inverter circuit 64 and stops the motor 340 (S55).

As described above, the computing unit 50 stops the motor 340 when the work load becomes equal to or greater than the threshold value C. At this time, the computing unit 50 determines that the work load becomes equal to or greater than the threshold value C when the motor current exceeds the main body-side overcurrent protection threshold value. The above-mentioned battery-side overcurrent protection threshold value is greater than the main body-side overcurrent protection threshold value.

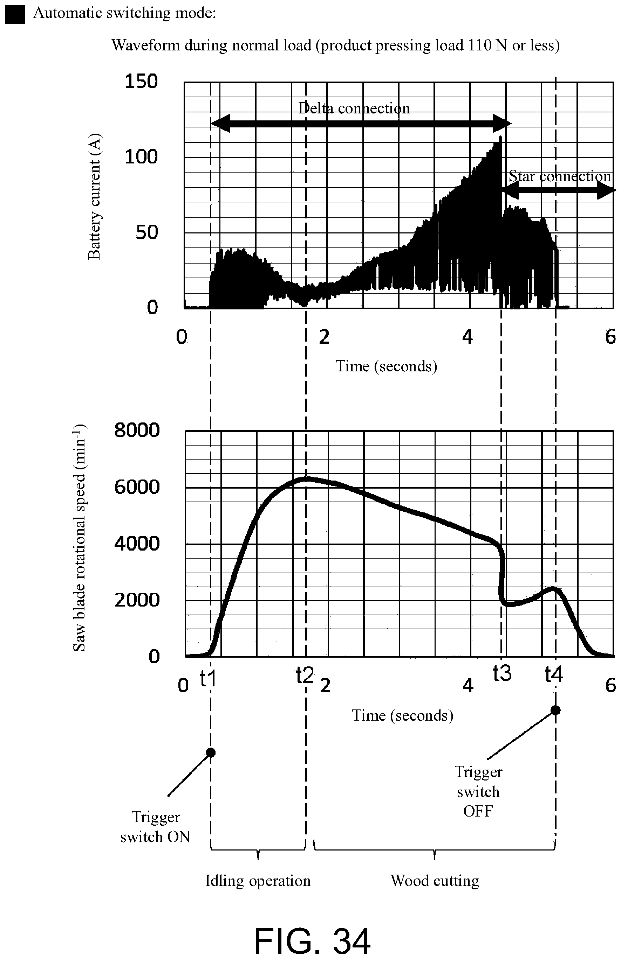

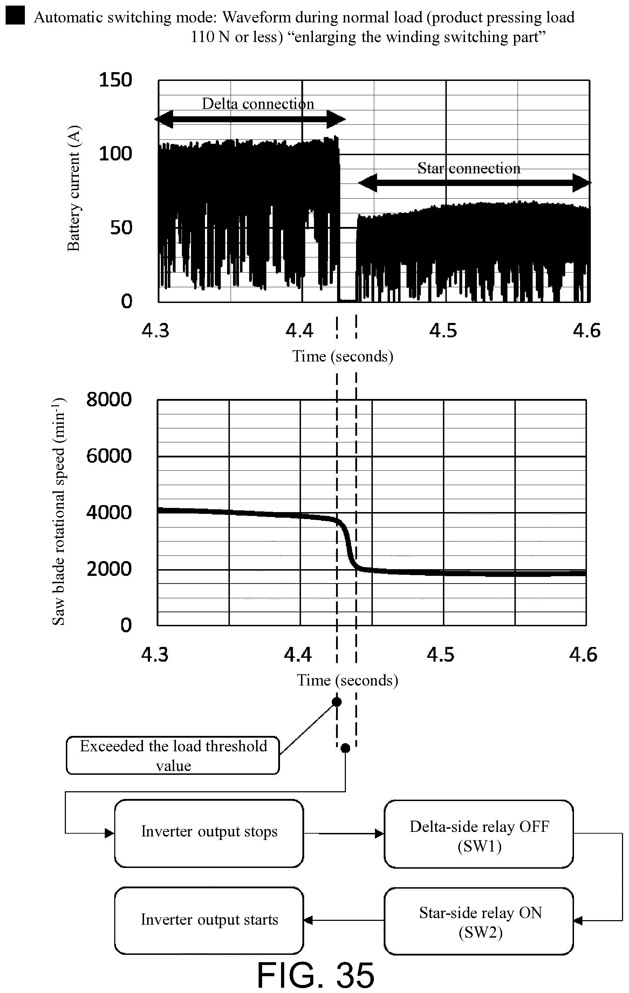

FIG. 34 is a graph showing the change over time in the battery current and the saw blade rotational speed in the automatic switching mode of the work machine 1, in the case where the work machine pressing force is set to 110 N or less. The work machine pressing force of 110 N or less corresponds to the first pressing force. FIG. 35 is a graph enlarging the vicinity of the switching timing (time t3) of the connection scheme in FIG. 34. The increase rate (increase speed) of the battery current immediately before the switching timing of the connection scheme in FIG. 34 corresponds to the first work load increase rate (increase speed).

At time t1, the trigger switch 306 is turned on, and idling operation is performed until time t2. During the period from time t1 to time t2, the saw blade rotational speed increases. From time t2, the saw blade 309 is pressed against wood (counter material), and cutting work is performed.

From time t2 onward, the work machine pressing force increases, the battery current increases, and the saw blade rotational speed decreases. At time t3 when the work machine pressing force is 110 N or less, the work load exceeds the threshold value A, and the coil connection scheme is switched from delta connection to star connection. This reduces the battery current (discharge current of the battery pack 307) and the saw blade rotational speed. Thereafter, the computing unit 50 controls the motor rotational speed to increase toward the target rotational speed, thereby increasing the saw blade rotational speed. At time t4, the trigger switch 306 is turned off, and the battery current and the saw blade rotational speed drop to zero.

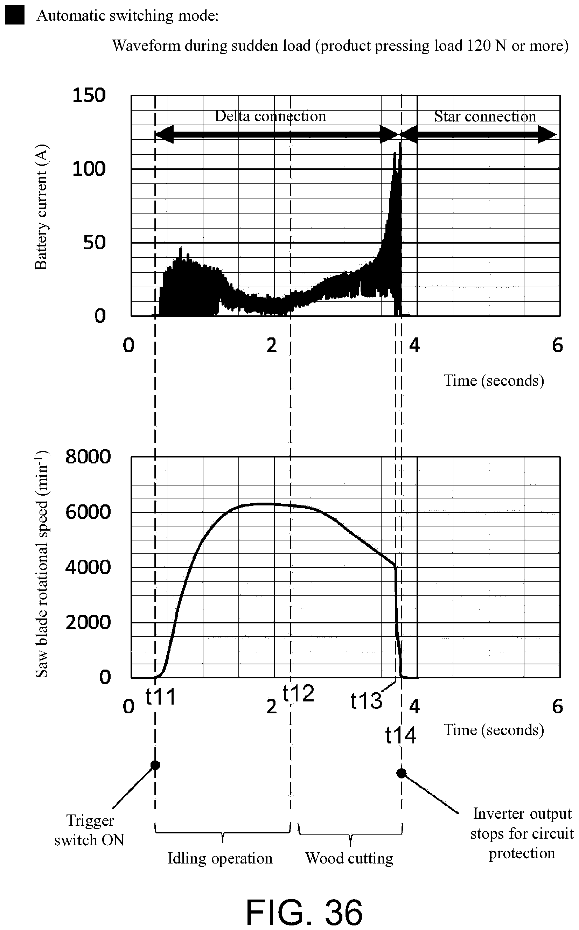

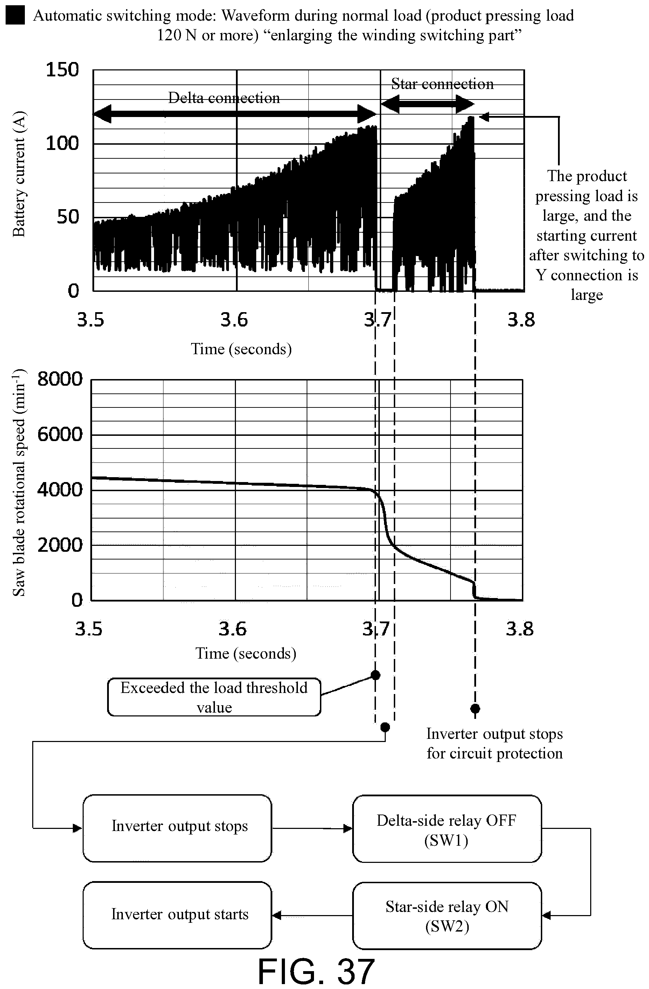

FIG. 36 is a graph showing the change over time in the battery current and the saw blade rotational speed in the automatic switching mode of the work machine 1, in the case where the work machine pressing force is suddenly increased to 120 N or more during operation in delta connection. The work machine pressing force of 120 N or more corresponds to the second pressing force. FIG. 37 is a graph enlarging the vicinity of the switching timing (time t13) of the connection scheme in FIG. 36. The increase rate (increase speed) of the battery current immediately before the switching timing of the connection scheme in FIG. 36 corresponds to the second work load increase rate (increase speed).

At time t11, the trigger switch 306 is turned on, and idling operation is performed until time t12. During the period from time t11 to time t12, the saw blade rotational speed increases. From time t12, the saw blade 309 is pressed against wood (counter material), and cutting work is performed.

From time t12 onward, the work machine pressing force increases, the battery current increases, and the saw blade rotational speed decreases. Before time t13, the work machine pressing force is suddenly increased to 120 N or more, and at time t13, the work load exceeds the threshold value A, and the coil connection scheme is switched from delta connection to star connection. This reduces the battery current and the saw blade rotational speed. The decrease in the saw blade rotational speed is greater than in the case where the work machine pressing force is 110 N or less (FIG. 34, FIG. 35). The computing unit 50 then attempts to start the motor 340 by star connection, but because the work machine pressing force is large, the starting current in star connection is large. Therefore, the motor current exceeds the main body-side overcurrent protection threshold value, and at time t14 immediately after switching to star connection, the motor 340 stops due to overload protection.

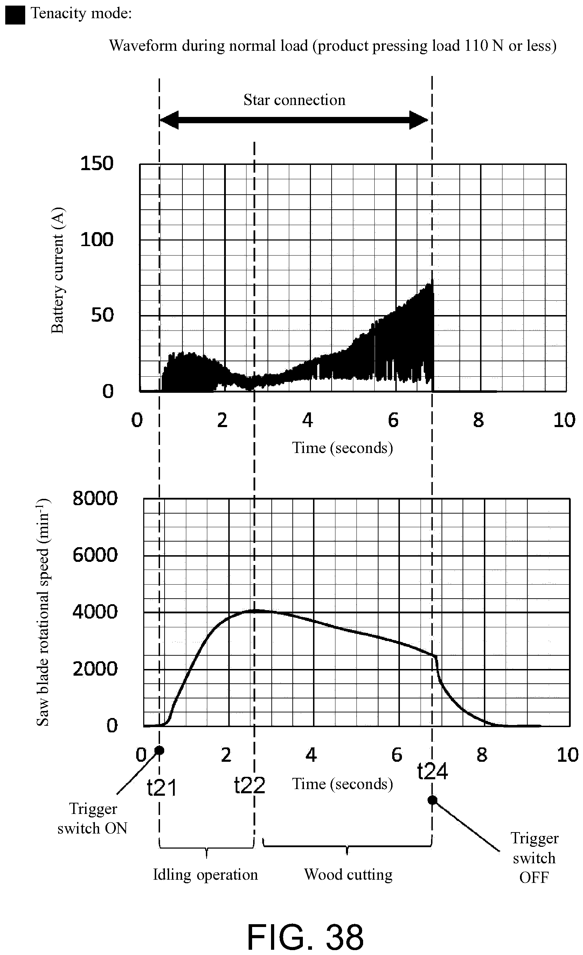

FIG. 38 is a graph showing the change over time in the battery current and the saw blade rotational speed in the tenacity mode of the work machine 1, in the case where the work machine pressing force is set to 110 N or less.

At time t21, the trigger switch 306 is turned on, and idling operation is performed until time t22. During the period from time t21 to time t22, the saw blade rotational speed increases. From time t22, the saw blade 309 is pressed against wood (counter material), and cutting work is performed.

From time t22 onward, the work machine pressing force increases, the battery current increases, and the saw blade rotational speed decreases. At time t24, the trigger switch 306 is turned off, and the battery current and the saw blade rotational speed drop to zero.

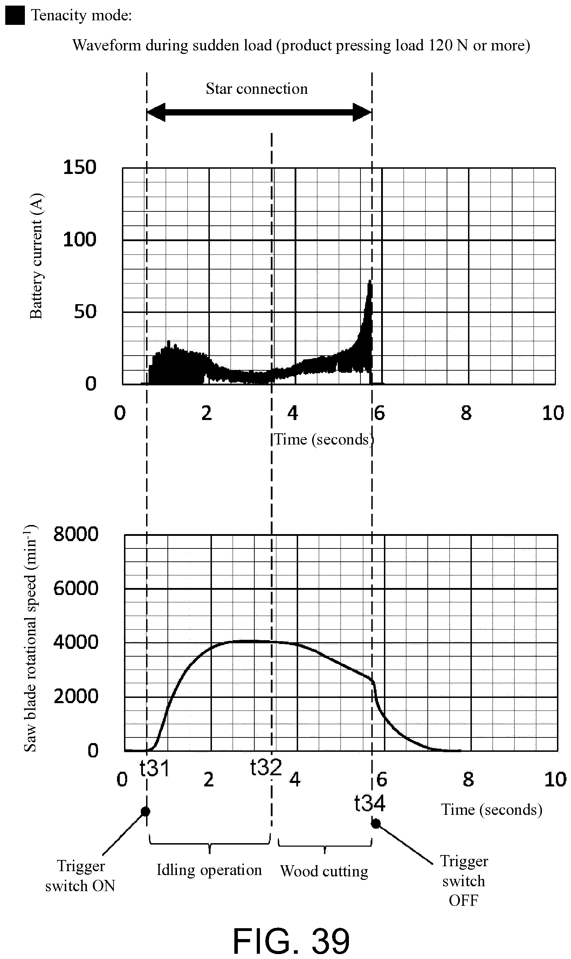

FIG. 39 is a graph showing the change over time in the battery current and the saw blade rotational speed in the tenacity mode of the work machine 1, in the case where the work machine pressing force is suddenly increased to 120 N or more during operation in delta connection.

At time t31, the trigger switch 306 is turned on, and idling operation is performed until time t32. During the period from time t31 to time t32, the saw blade rotational speed increases. From time t32, the saw blade 309 is pressed against wood (counter material), and cutting work is performed.

From time t32 onward, the work machine pressing force increases, the battery current increases, and the saw blade rotational speed decreases. During this process, the work machine pressing force is suddenly increased to 120 N or more, but the overload protection function is not activated. At time t34, the trigger switch 306 is turned off, and the battery current and the saw blade rotational speed drop to zero.

According to this embodiment, the following effects can be achieved.
(1) The computing unit 50 is configured to be capable of executing the automatic switching mode (first mode) and the tenacity mode (second mode). In the automatic switching mode, the coil connection scheme is switched from delta connection for high speed rotation to star connection (Y connection) for high torque in response to an increase in the work load. In the tenacity mode, the coil connection scheme is fixed to star connection for high torque, and the coil connection scheme is not switched regardless of the work load. Therefore, unlike the case where the only mode is to switch the coil connection scheme according to the work load, this embodiment also makes it possible to fix the coil connection scheme regardless of the work load, which improves workability.
(2) In the automatic switching mode, the computing unit 50 is configured to switch the coil connection scheme from delta connection for high speed rotation to star connection (Y connection) for high torque in response to an increase in the work load when work is performed by pressing the work machine 1 against the counter material with a work machine pressing force (first pressing force) of 110 N or less, and to stop the motor 340 immediately after switching the coil connection scheme from delta connection for high speed rotation to star connection (Y connection) for high torque in response to an increase in the work load when work is performed by pressing the work machine 1 against the counter material with a work machine pressing force (second pressing force) of 120 N or more. Therefore, by switching the coil connection scheme according to the work load, high workability can be achieved, and appropriate overload protection can also be provided for the motor 340.
(3) In the tenacity mode, the computing unit 50 sets the coil connection scheme to star connection for high torque. By setting the coil connection scheme to connection for high torque from the beginning, it is possible to prevent the overload protection function from being activated due to the starting current after switching to connection for high torque, which is different from the case of switching from connection for high speed rotation to connection for high torque midway. According to this, the activation of the overload protection function can be prevented even if work is performed by pressing the work machine 1 against the counter material with a work machine pressing force (second pressing force) of 120 N or more. Therefore, the workability when performing work that requires the work machine pressing force to be suddenly increased to 120 N or more (for example, rough cutting work) is improved.
(4) In the automatic switching mode, the computing unit 50 switches the coil connection scheme from delta connection for high speed rotation to star connection (Y connection) for high torque when the work load exceeds the threshold value A (first winding switching threshold value). Furthermore, when the work load exceeds the threshold value C (overload protection threshold value), the computing unit 50 stops the motor 340 by the overload protection function. Here, the threshold value A is set to be equal to or smaller than the threshold value C. Therefore, the overload protection function can be prevented from being activated while the motor 340 is being driven in delta connection for high speed rotation, which improves workability. In addition, by setting the threshold value A to 2/3 or more of the threshold value C, the range that allows work at high speed operation can be expanded, which improves workability. This effect can be maximized by setting the threshold value A to be equal to the threshold value C.
(5) The work machine 1 includes the operation mode switching switch 312 that enables the operator to select the operation mode of the work machine 1 between the automatic switching mode (first mode) and the tenacity mode (second mode). Therefore, the operator can freely select between the automatic switching mode and the tenacity mode according to the form of work to be performed, which improves workability.
(6) The computing unit 50 provides a pause period in which all of the six switching elements of the inverter circuit 64 are turned off when switching the coil connection scheme. Therefore, it is possible to prevent unexpected problems caused by driving the inverter circuit 64 while the coil connection scheme is being switched, thereby improving reliability.
(7) In the automatic switching mode, the computing unit 50 switches the coil connection scheme to delta connection for high speed rotation when the work load decreases and becomes equal to or smaller than the threshold value B (second winding switching threshold value) while the coil connection scheme is set to star connection (Y connection) for high torque. Here, the threshold value A (first winding switching threshold value) is set to be greater than the threshold value B. This makes it possible to suppress frequent switching of the coil connection scheme between delta connection and star connection.
(8) When the discharge current of the battery pack 307 exceeds the battery-side overcurrent protection threshold value, the battery pack 307 outputs the discharge stop signal, and the computing unit 50 stops the motor 340 when receiving the discharge stop signal from the battery pack 307. On the other hand, when the motor current exceeds the main body-side overcurrent protection threshold value, the computing unit 50 determines that the work load has reached or exceeded the threshold value C, and stops the motor 340. Here, the battery-side overcurrent protection threshold value is greater than the main body-side overcurrent protection threshold value. Therefore, basically the overload protection function on the main body side is activated before the overcurrent protection function of the battery pack 307 is activated, thereby suppressing the burden on the battery pack 307.
(9) In the connection switching control for switching the coil connection scheme from star connection to delta connection, that is, in the connection switching control for switching from the high torque connection state to the high rotational speed connection state, the computing unit 50 is configured to switch from a state where the delta connection relay element 32 is off and the star connection relay element 33 is on (high torque connection state) to a state where the delta connection relay element 32 and the star connection relay element 33 are both off (connection terminated state) when the inverter circuit 64 is in the drive stop state. Since the star connection relay element 33 is turned off in a state where no current flows through, the risk of damage to the star connection relay element 33 is reduced compared to the case where the star connection relay element 33 is turned off in a state where a current is flowing through.
(10) In the connection switching control for switching the coil connection scheme from star connection to delta connection, the computing unit 50 is configured to switch from a state where the delta connection relay element 32 and the star connection relay element 33 are both off (connection terminated state) to a state where the delta connection relay element 32 is on and the star connection relay element 33 is off (high rotational speed connection state) when the inverter circuit 64 is in the drive stop state. Thus, no current flows through the delta connection relay element 32 at the moment the delta connection relay element 32 is turned on, which reduces the risk of damage to the delta connection relay element 32.

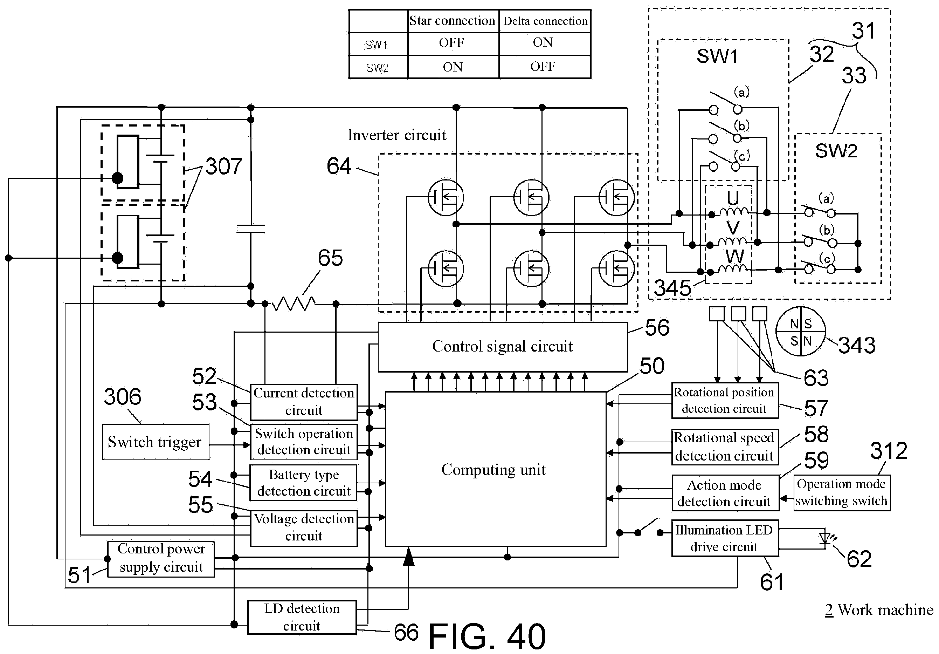

(Third embodiment) FIG. 40 is a circuit block diagram of a work machine 2 according to the third embodiment of the present invention. The circuit configuration shown in FIG. 40 differs from FIG. 8 in that two battery packs 307 are provided and connected in series with each other, but is the same in other aspects.

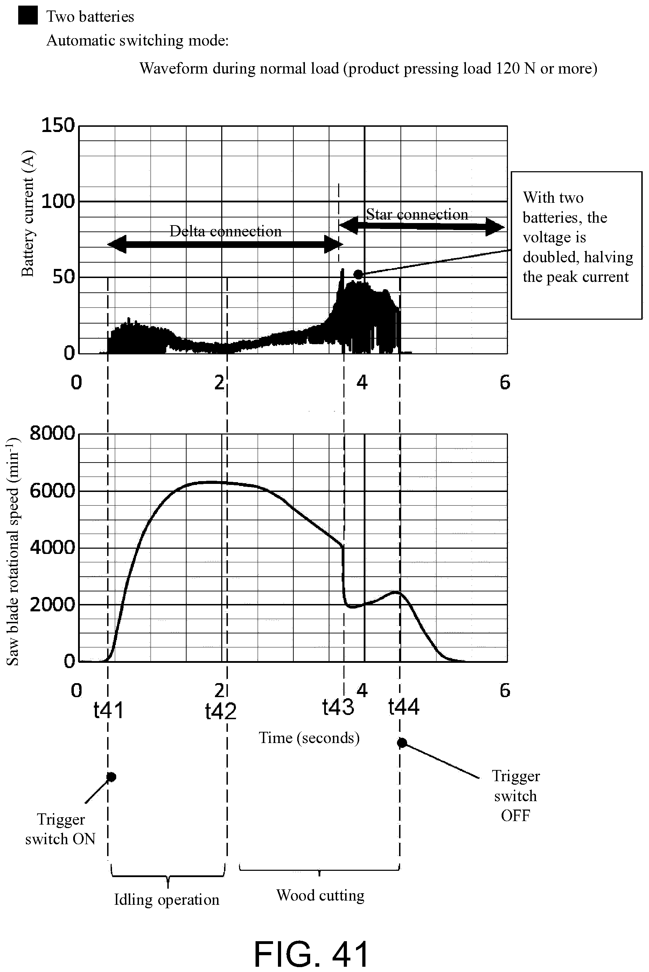

FIG. 41 is a graph showing the change over time in the battery current and the saw blade rotational speed in the automatic switching mode of the work machine 2, in the case where the work machine pressing force is suddenly increased to 120 N or more during operation in delta connection.

At time t41, the trigger switch 306 is turned on, and idling operation is performed until time t42. During the period from time t41 to time t42, the saw blade rotational speed increases. From time t42, the saw blade 309 is pressed against wood (counter material), and cutting work is performed.

From time t42 onward, the work machine pressing force increases, the battery current increases, and the saw blade rotational speed decreases. Before time t43, the work machine pressing force is suddenly increased to 120 N or more, and at time t43, the work load exceeds the first winding switching threshold value, and the coil connection scheme is switched from delta connection to star connection. This reduces the battery current and the saw blade rotational speed. Thereafter, the computing unit 50 controls the motor rotational speed to increase toward the target rotational speed, thereby increasing the saw blade rotational speed. At time t44, the trigger switch 306 is turned off, and the battery current and the saw blade rotational speed drop to zero.

In FIG. 36 described above, the motor 340 stops due to overload protection at time t14 immediately after switching to star connection, whereas in FIG. 41, the motor 340 does not stop due to overload protection even when switched to star connection. This is because, in comparison with the work machine 1, the work machine 2 has two battery packs 307 connected in series and the output voltage is doubled, so the battery current is halved and the peak value of the starting current after switching to star connection is also halved.

Thus, according to this embodiment, in addition to the effects of the second embodiment, the starting current after the coil connection scheme is switched from delta connection for high speed rotation to star connection (Y connection) for high torque in the automatic switching mode can be suppressed to prevent the overload protection function from being activated, thereby improving workability.

In the second and third embodiments, the second mode may fix the coil connection scheme to delta connection for high speed rotation. In this case, it is possible to improve workability when it is desired to perform work at high rotational speed, even at the expense of tenacity at high torque.

The configuration may be made to detect a sudden increase in the work machine pressing force with a sensor such as an acceleration sensor or a current sensor and automatically switch to the tenacity mode, instead of or in addition to the operator selecting between the automatic switching mode and the tenacity mode using the operation mode switching switch 312. Furthermore, the mode may be switched by performing an operation different from the normal operation on the trigger switch 306, for example, operating the trigger switch 306 multiple times in a short period of time, or the mode may be switched by performing an operation different from the normal operation on an existing switch (such as the trigger switch 306, the light mode switching switch 314, or a remaining capacity switch operated by the operator to display the remaining capacity of the battery pack). Compared to providing a dedicated switch or sensor, using an existing switch can reduce the manufacturing costs.

A plurality of types of modes with different threshold values for switching the coil connection scheme may be provided as the automatic switching mode.

The second mode is a mode in which the coil connection scheme is not switched from high speed rotation to high torque during the work after the motor 340 is started. Therefore, the second mode also includes control which, for example, at the time of starting the motor 340, that is, at the time of starting cutting work before performing actual work, determines that the load of the motor 340 is large and switches the coil connection scheme from high speed rotation to high torque to start the actual work with the coil connection scheme set to high torque. Furthermore, the control, which switches the coil connection scheme from high torque to high speed rotation and makes it impossible to continue the work in a high load state in which the overload protection function is activated to stop the motor 340 as soon as the coil connection scheme is switched to high speed rotation, ends the actual work while the coil connection scheme is in the high torque state, and is included in the second mode.

(Fourth embodiment) FIG. 1 to FIG. 7 and FIG. 42 to FIG. 48 relate to a work machine 3 according to the fourth embodiment of the present invention. Hereinafter, description of parts shared by the first embodiment and the fourth embodiment will be omitted as appropriate.

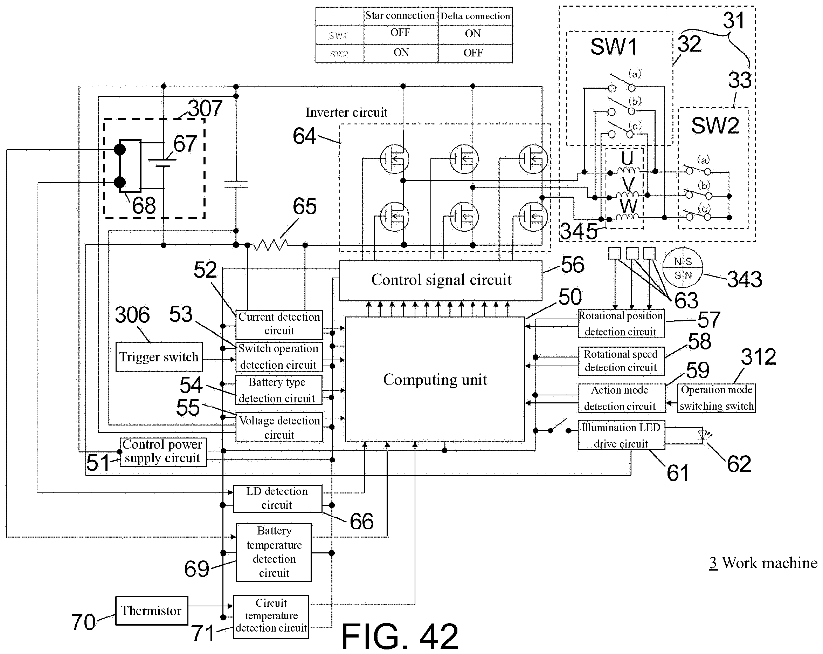

FIG. 42 is a circuit block diagram of the work machine 3. The following description will focus on the differences from FIG. 8 and the parts not described in FIG. 8. The protection IC 68 detects the temperature of the battery cell 67 (hereinafter also referred to as "battery temperature") and outputs a battery temperature signal. The detection resistor 65 and the current detection circuit 52 form a detection unit (sensor unit) that detects the physical quantity (motor current) that changes depending on the driving of the motor 340.

The battery temperature detection circuit 69 detects the battery temperature signal from the battery pack 307 and transmits the same to the computing unit 50. The battery temperature detection circuit 69 forms a detection unit that detects a physical quantity (battery temperature) that changes as the motor 340 is driven. A thermistor 70 serving as a temperature detection element is disposed near the inverter circuit 64 and outputs a circuit temperature signal corresponding to the temperature of each switching element of the inverter circuit 64 (hereinafter referred to as "circuit temperature"). The circuit temperature detection circuit 71 detects the circuit temperature signal from the thermistor 70 and transmits the same to the computing unit 50. The thermistor 70 and the circuit temperature detection circuit 71 form a detection unit (sensor unit) that detects a physical quantity (circuit temperature) that changes as the motor 340 is driven.

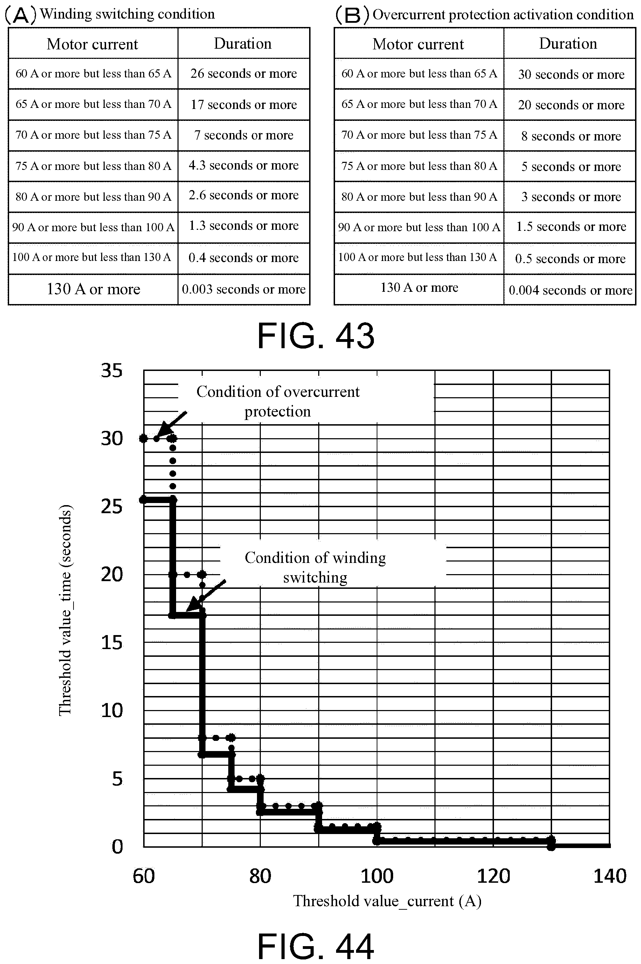

The computing unit 50 has an overcurrent protection function (overload protection function) that stops the motor 340 even if the trigger switch 306 is on when the overcurrent protection (overload protection) activation condition described later in FIG. 43(B) is satisfied. The computing unit 50 has a temperature protection function that stops the motor 340 even if the trigger switch 306 is on when the battery temperature or circuit temperature exceeds a temperature threshold value.

In the above-described second embodiment, the winding switching condition is exemplified as the work load exceeding the threshold value A (S11 in FIG. 29). In this embodiment, the winding switching condition is defined in more detail. The control flowchart of the computing unit 50 in the case where the work machine pressing force is increased after the trigger switch 306 is turned on in the automatic switching mode is the same as shown in FIG. 29 except that S11 in FIG. 29 is replaced by a branch based on whether the winding switching condition is satisfied.

(Winding switching condition and overcurrent protection activation condition) FIG. 43(A) is a table summarizing the winding switching condition in the work machine 3. FIG. 43(B) is a table summarizing the overcurrent protection activation condition in the work machine 3. FIG. 44 is a graph showing the relationship between the current range and the time threshold value shown in FIG. 43(A) and (B), and is a graph showing the relationship between the current range and the time threshold value under both the winding switching condition (solid line) and the overcurrent protection activation condition (dotted line).

The winding switching condition and the overcurrent protection activation condition are each represented by a combination of the motor current and duration thereof. Specifically, in each of the winding switching condition and the overcurrent protection activation condition, multiple ranges (hereinafter also referred to as "current ranges") are set for the motor current equal to or greater than a current threshold value (here, 60 A), and for each current range, a threshold value (hereinafter also referred to as "time threshold value") for the duration of the motor current within that current range is set. The motor current corresponds to a work load, the current threshold value corresponds to a load threshold value, and the current range corresponds to a load range. The winding switching condition and the overcurrent protection activation condition are both set so that the time threshold value becomes smaller as the current value increases in the current range.

The winding switching condition shown in FIG. 43(A) can be considered as a condition related to the time threshold value that is set according to the detected value of the motor current. That is, the computing unit 50 identifies a current range based on the detected value of the motor current, and determines that the winding switching condition is satisfied in the case where the duration of the motor current is equal to or longer than the time threshold value corresponding to that current range. In other words, the winding switching condition is that the state where the motor current remains in any current range continues for a period of time equal to or longer than the time threshold value corresponding to that current range.

The current ranges under the winding switching condition shown in FIG. 43(A) are common to the current ranges under the overcurrent protection activation condition shown in FIG. 43(B). On the other hand, the time threshold values corresponding to the current ranges under the winding switching condition shown in FIG. 43(A) are smaller than the time threshold values corresponding to the current ranges under the overcurrent protection activation condition shown in FIG. 43(B). That is, the winding switching condition is set so that the coil connection scheme is switched from delta connection to star connection before the overcurrent protection function is activated and the motor 340 stops. This makes it possible to prevent the overcurrent protection function from being activated and causing the motor 340 to stop before the coil connection scheme is switched from delta connection to star connection, thereby improving workability.

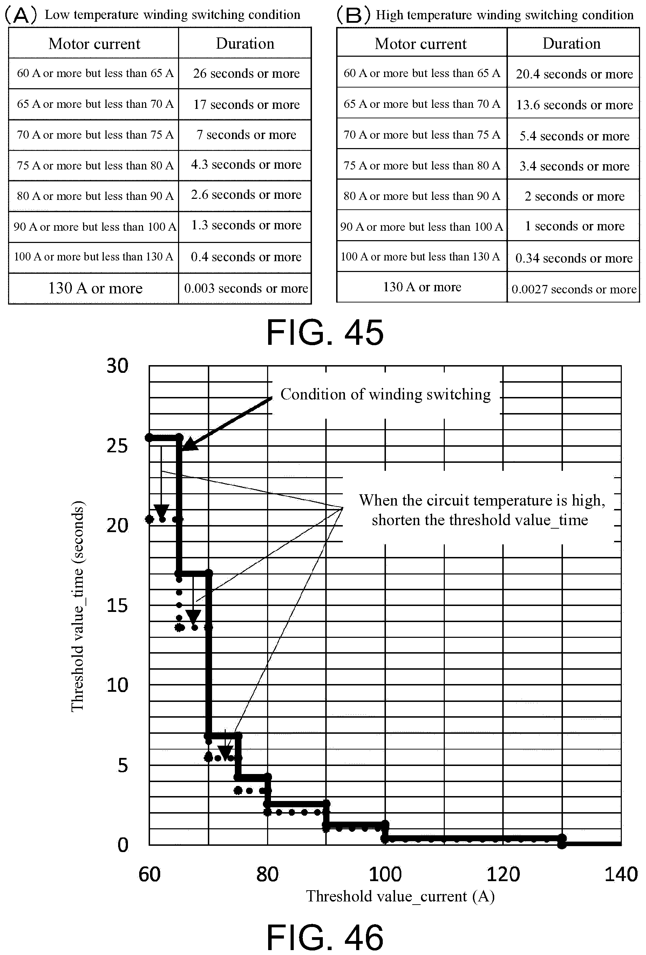

(Winding switching condition according to temperature) FIG. 45(A) is a table summarizing the winding switching condition in the case where the circuit temperature of the work machine 3 is low (hereinafter also referred to as "low temperature winding switching condition"). FIG. 45(B) is a table summarizing the winding switching condition in the case where the circuit temperature of the work machine 3 is high (hereinafter also referred to as "high temperature winding switching condition"). FIG. 46 is a graph showing the relationship between the current range and the time threshold value shown in FIG. 45(A) and (B), and is a graph showing the relationship between the current range and the time threshold value under both the low temperature winding switching condition (solid line) and the high temperature winding switching condition (dotted line).

The computing unit 50 determines, based on the signal from the circuit temperature detection circuit 71, whether the circuit temperature is low, that is, whether the circuit temperature is equal to or lower than a predetermined temperature. A temperature equal to or lower than the predetermined temperature is an example of the first temperature, and a temperature exceeding the predetermined temperature is an example of the second temperature. The table of the low temperature winding switching condition shown in FIG. 45(A) has the same contents as the table of the winding switching condition shown in FIG. 43(A).

The current ranges under the high temperature winding switching condition shown in FIG. 45(B) are common to the current ranges under the low temperature winding switching condition shown in FIG. 45(A). On the other hand, the time threshold values corresponding to the current ranges under the high temperature winding switching condition shown in FIG. 45(B) are smaller than the time threshold values corresponding to the current ranges under the low temperature winding switching condition shown in FIG. 45(A). This makes it possible to prevent the temperature protection function related to circuit temperature from being activated and causing the motor 340 to stop before the coil connection scheme is switched from delta connection to star connection, thereby improving workability.

The winding switching condition shown in FIG. 45(A) and (B) can be considered as a condition related to the time threshold value that is set according to the detected value of the motor current and the detected value of the circuit temperature. That is, the computing unit 50 determines which of the winding switching conditions of FIG. 45(A) and (B) is to be used based on the detected value of the circuit temperature, identifies the current range based on the detected value of the motor current, and determines that the winding switching condition is satisfied in the case where the duration of the motor current is equal to or longer than the time threshold value corresponding to that current range. In other words, the winding switching condition shown in FIG. 45(A) and (B) is that the state where the motor current remains in any current range continues for a period of time equal to or longer than the time threshold value corresponding to that current range and circuit temperature.

The low temperature winding switching condition shown in FIG. 45(A) may be applied as the winding switching condition in the case where the battery temperature is low. The high temperature winding switching condition shown in FIG. 45(B) may be applied as the winding switching condition in the case where the battery temperature is high. This makes it possible to prevent the temperature protection function related to battery temperature from being activated and causing the motor 340 to stop before the coil connection scheme is switched from delta connection to star connection. The computing unit 50 determines, based on the signal from the battery temperature detection circuit 69, whether the battery temperature is low, that is, whether the circuit temperature is equal to or lower than the predetermined temperature.

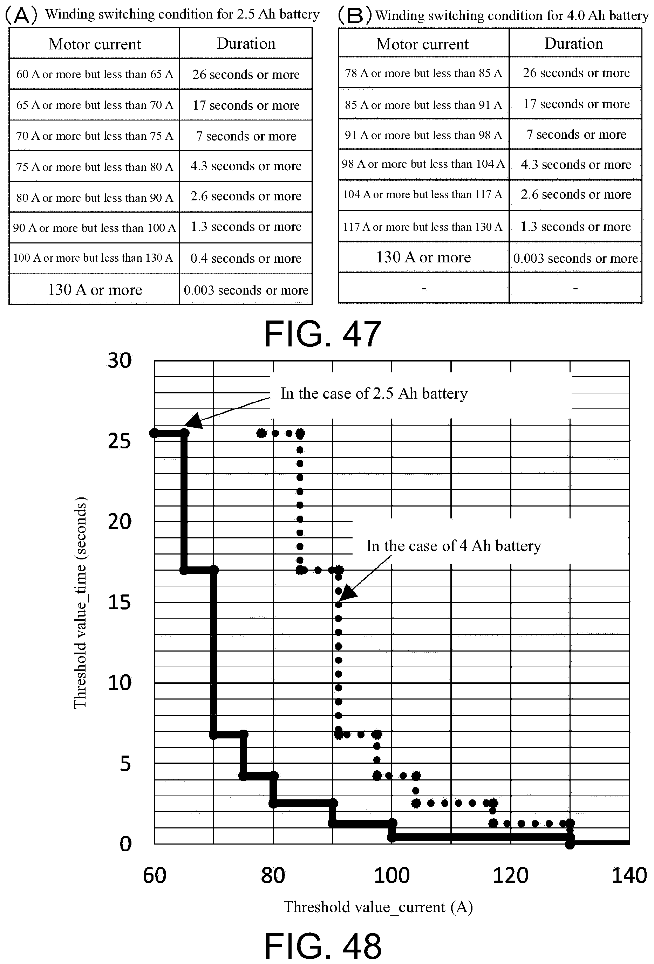

(Winding switching condition according to battery capacity) FIG. 47(A) is a table summarizing the winding switching condition (hereinafter also referred to as "low capacity winding switching condition") in the case where the rated capacity of the battery pack 307 of the work machine 3 is 2.5 Ah (low capacity). FIG. 47(B) is a table summarizing the winding switching condition (hereinafter also referred to as "high capacity winding switching condition") in the case where the rated capacity of the battery pack 307 is 4.0 Ah (high capacity). FIG. 48 is a graph showing the relationship between the current range and the time threshold value shown in FIG. 47(A) and (B), and is a graph showing the relationship between the current range and the time threshold value under both the low capacity winding switching condition (solid line) and the high capacity winding switching condition (dotted line).

The computing unit 50 determines, based on the signal from the battery type detection circuit 54, whether the rated capacity (hereinafter also referred to as "rated capacity") of the battery pack 307 is low, that is, whether the rated capacity is equal to or smaller than a predetermined capacity. A rated capacity exceeding the predetermined capacity is an example of the first capacity, and a rated capacity equal to or smaller than the predetermined capacity is an example of the second capacity. The table of the low capacity winding switching condition shown in FIG. 47(A) has the same contents as the table of the winding switching condition shown in FIG. 43(A).

The time threshold values under the high capacity winding switching condition shown in FIG. 47(B) are common to the time threshold values under the low capacity winding switching condition shown in FIG. 47(A). On the other hand, the current ranges corresponding to the time threshold values under the high capacity winding switching condition shown in FIG. 47(B) have greater current values than the current ranges corresponding to the time threshold values under the low capacity winding switching condition shown in FIG. 47(A). This allows work to be performed with delta connection, which is for high speed rotation, up to the limit according to the rated capacity, by taking advantage of the fact that the temperature rise is more gradual when the rated capacity is large than when the rated capacity is small, at the same output current, thereby improving workability.

The winding switching condition shown in FIG. 47(A) and (B) can be considered as a condition related to the time threshold value that is set according to the detected value of the motor current and the detected value of the rated capacity. That is, the computing unit 50 determines which of the winding switching conditions of FIG. 47(A) and (B) is to be used based on the detected value of the rated capacity, identifies the current range based on the detected value of the motor current, and determines that the winding switching condition is satisfied in the case where the duration of the motor current is equal to or longer than the time threshold value corresponding to that current range. In other words, the winding switching condition shown in FIG. 47(A) and (B) is that the state where the motor current remains in any current range continues for a period of time equal to or longer than the time threshold value corresponding to that current range and rated capacity.

This embodiment achieves the following effects.
(1) By setting the winding switching condition as shown in FIG. 43(A), it is possible to prevent the temperature protection function from being activated and causing the motor 340 to stop before the coil connection scheme is switched from delta connection (first connection scheme) to star connection (second connection scheme), thereby improving operability. When the coil connection scheme is switched to star connection, the motor current is reduced and the temperature rise of elements such as the inverter circuit 64 is suppressed, so that activation of the temperature protection function can be avoided and work can be continued, thereby improving workability. As a comparative example, in a configuration in which the connection scheme is switched when the motor current exceeds a threshold value, if work is performed with a motor current not exceeding the threshold value and continuing to be close to the threshold value, the connection scheme cannot be switched and the temperature protection function may be activated or the elements may be damaged, making it impossible to continue the work and resulting in poor workability. In the comparative example, if the threshold value is set low, for example, to 50 A, so that the work cannot be continued, the period during which the work can be performed with delta connection (first connection scheme) becomes shorter, resulting in poor workability. This embodiment is intended to suitably solve the above-mentioned problems in the comparative example.
(2) By setting the relationship between the winding switching condition and the overcurrent protection activation condition as shown in FIG. 43(A) and (B), it is possible to prevent the overcurrent protection function from being activated and causing the motor 340 to stop before the coil connection scheme is switched from delta connection to star connection, thereby improving workability. In addition, work can be performed with delta connection (first connection scheme) until immediately before the overcurrent protection function is activated, thereby improving workability.
(3) As shown in FIG. 45(A) and (B), by setting the winding switching condition differently for when the circuit temperature or battery temperature is low and when the circuit temperature or battery temperature is high, it is possible to prevent the temperature protection function from being activated and causing the motor 340 to stop before the coil connection scheme is switched from delta connection (first connection scheme) to star connection (second connection scheme), thereby improving operability. In addition, work can be performed with delta connection (first connection scheme) up to the limit within the range allowed by the circuit temperature and battery temperature, thereby improving workability.
(4) As shown in FIG. 47(A) and (B), by setting the winding switching condition differently for when the rated capacity of the battery pack 307 is low and when the rated capacity is high, work can be performed with delta connection (first connection scheme) up to the limit according to the rated capacity of the battery pack 307, thereby improving workability.

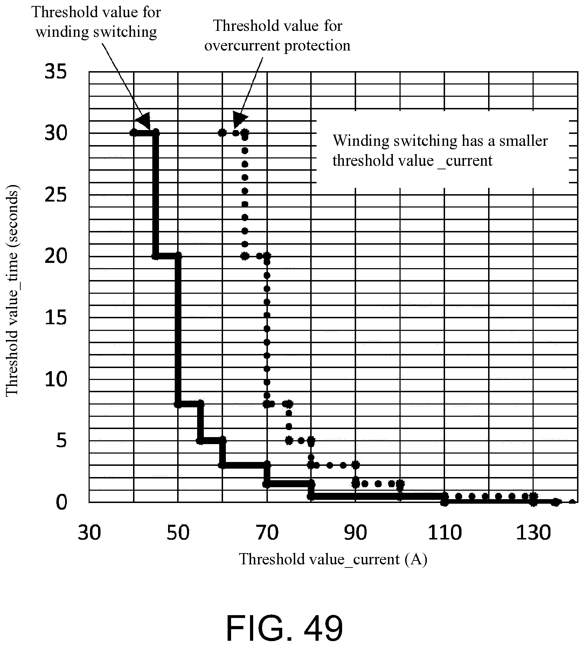

(Fifth embodiment) FIG. 49 is a graph showing the relationship between the current range and the time threshold value in each of the winding switching condition and the overcurrent protection activation condition in regard to the work machine according to the fifth embodiment. In the example of FIG. 44 described above, the winding switching condition and the overcurrent protection activation condition share common current ranges, but the time threshold values corresponding to the current ranges are set to be different, whereas in the example of FIG. 49, the winding switching condition and the overcurrent protection activation condition share common time threshold values, but the current ranges corresponding to the time threshold values are set to be different. The example of FIG. 49 also achieves the same effects as in the example of FIG. 44. It should be noted that both the current range and the time threshold value in the winding switching condition may be set to be smaller than the current range and the time threshold value in the overcurrent protection activation condition.

Although not shown in the figure, the low temperature winding switching condition and the high temperature winding switching condition may be set to share common time threshold values, but have different current ranges corresponding to the time threshold values (so that the current value is smaller in the current range for the high temperature winding switching condition than in the current range for the low temperature winding switching condition). In addition, the current range and the time threshold value under the high temperature winding switching condition may both be set to be smaller than the current range and the time threshold value under the low temperature winding switching condition.

Furthermore, the low capacity winding switching condition and the high capacity winding switching condition may be set to share common current ranges, but have different time threshold values corresponding to the current ranges (so that the time threshold value for the high capacity winding switching condition is greater than the time threshold value for the low capacity winding switching condition). In addition, the current range and the time threshold value under the high capacity winding switching condition may both be set to be greater than the current range and the time threshold value under the low capacity winding switching condition.

In the fourth and fifth embodiments, three or more types of winding switching conditions may be set according to each of the circuit temperature, battery temperature, and rated capacity. Further, instead of switching between delta connection and star connection, the coil connection scheme may be a scheme in which a plurality of coils in a single phase are switched between series connection and parallel connection. Furthermore, the threshold values of the embodiments, for example, the threshold values of FIG. 44 and FIG. 49, may be combined according to the work load. For example, in the case where the work load is small (smaller than 70 A), the connection scheme may be switched or overload protection may be performed based on the threshold value in FIG. 44, and in the case where the work load is large (70 A or more), the connection scheme may be switched or overload protection may be performed based on the threshold value in FIG. 49. In addition, in the case where the work load is small (for example, smaller than 70 A), the connection scheme may be switched and overload protection may be performed based on both the load threshold value and the time threshold value as shown in FIG. 44, etc., and in the case where the work load is large (70 A or more), the connection scheme may be switched and overload protection may be performed based only on the load threshold value.

(Sixth embodiment) FIG. 1 to FIG. 7 and FIG. 50 to FIG. 57 relate to a work machine 4 according to the sixth embodiment of the present invention. Hereinafter, description of parts shared by the first embodiment and the sixth embodiment will be omitted as appropriate.

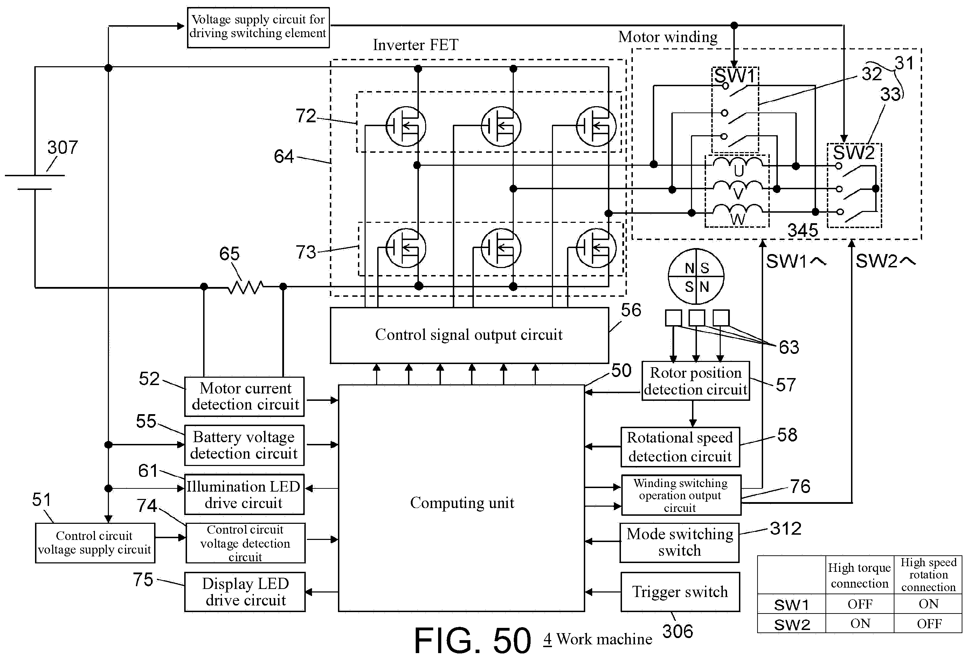

FIG. 50 is a circuit block diagram of the work machine 4. The following description will focus on the differences from FIG. 8 and the parts not described in FIG. 8.

The six switching elements that form the inverter circuit 64 include three upper switching elements 72 on the high potential side and three lower switching elements 73 on the low potential side.

The control circuit voltage detection circuit 74 detects the output voltage of the control circuit voltage supply circuit 51 and transmits the same to the computing unit 50. The display LED drive circuit 75 drives the operation mode display LED 313 and the light mode display LEDs 315 and 317 under the control of the computing unit 50. The winding switching operation output circuit 76 outputs a control signal for controlling the on/off of the delta connection relay element 32 and the star connection relay element 33 under the control of the computing unit 50.

Three delta connection relay elements 32 correspond to a high speed rotation-side switching unit, and three star connection relay elements 33 correspond to a high torque-side switching unit. The delta connection is an example of the first connection through which a brake current due to the electric brake of the motor 340 is likely to flow. The star connection is an example of the second connection through which the brake current due to the electric brake of the motor 340 is less likely to flow.

The control in the case where the operation mode is the automatic switching mode will be described below.

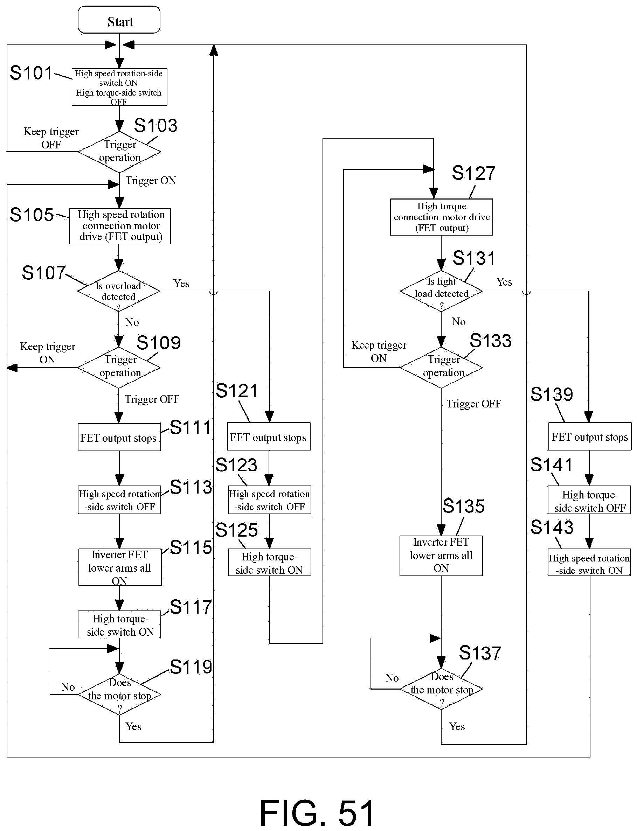

(First control example) FIG. 51 is a flowchart showing the first control example of the work machine 4. When started, the computing unit 50 turns on the three delta connection relay elements 32 and turns off the three star connection relay elements 33 (S101).

In the case where the trigger switch 306 is off ("Keep trigger OFF" in S103), the computing unit 50 returns to S101. In the case where the trigger switch 306 is on ("Trigger ON" in S103), the computing unit 50 controls the inverter circuit 64 with the three delta connection relay elements 32 on (state of high speed rotation mode) to drive the motor 340 (S105).

The computing unit 50 checks whether there is an overload state (high load state) (S107). Here, the overload state is a state where the load is equal to or greater than an overload detection threshold value (first connection switching threshold value).

In the case where no overload state is detected (No in S107), the computing unit 50 proceeds to S109. In the case where the trigger switch 306 is on ("Keep trigger ON" in S109), the computing unit 50 returns to S105.

In the case where the trigger switch 306 is off ("Trigger OFF" in S109), the computing unit 50 turns off the six switching elements of the inverter circuit 64 (S111), turns off the three delta connection relay elements 32 (S113), turns on the three lower switching elements 73 of the inverter circuit 64 (S115), turns on the three star connection relay elements 33 (S117), and applies an electric brake to the motor 340 in the state of the high torque mode (star connection). The number of the lower switching elements 73 that are turned on in S115 may be one or two. The computing unit 50 continues the electric brake until the motor 340 stops (No in S119), and when the motor 340 stops (Yes in S119), the computing unit 50 returns to S101.

In this way, the computing unit 50 is configured to switch to the high torque mode (star connection), apply an electric brake to the motor 340, and stop the motor 340 when the trigger switch 306 is turned off in the high speed rotation mode (delta connection). At this time, after the three lower switching elements 73 of the inverter circuit 64 are turned on, the three star connection relay elements 33 are turned on.

In the case where an overload state is detected (Yes in S107), the computing unit 50 turns off the six switching elements of the inverter circuit 64 (S121), turns off the three delta connection relay elements 32 (S123), turns on the three star connection relay elements 33 (S125), and controls the inverter circuit 64 with the three star connection relay elements 33 on (state of high torque mode) to drive the motor 340 (S127).

In this way, the computing unit 50 is configured to switch to the high torque mode (star connection) when the work load increases in the high speed rotation mode (delta connection).

While the motor 340 is being driven in the high torque mode (star connection) (S127), the computing unit 50 checks whether there is a light load state (S131). The light load state is a state where the load is equal to or smaller than a light load detection threshold value (second connection switching threshold value). The second connection switching threshold value is smaller than the above-mentioned first connection switching threshold value for determining whether there is an overload state.

In the case where no light load state is detected (No in S131), the computing unit 50 proceeds to S133. In the case where the trigger switch 306 is on ("Keep trigger ON" in S133), the computing unit 50 returns to S127. In the case where the trigger switch 306 is off ("Trigger OFF" in S133), the computing unit 50 turns on the three lower switching elements 73 of the inverter circuit 64 (S135) and applies an electric brake to the motor 340. The computing unit 50 continues the electric brake until the motor 340 stops (No in S137), and when the motor 340 stops (Yes in S137), the computing unit 50 returns to S101. The number of the lower switching elements 73 that are turned on in S135 may be one or two.

In the case where a light load state is detected (Yes in S131), the computing unit 50 turns off the six switching elements of the inverter circuit 64 (S139), turns off the three star connection relay elements 33 (S141), turns on the three delta connection relay elements 32 (S143), and controls the inverter circuit 64 with the three delta connection relay elements 32 on (state of high speed rotation mode) to drive the motor 340 (S105).

In this way, the computing unit 50 is configured to switch to the high speed rotation mode (delta connection) when the work load decreases in the high torque mode (star connection).

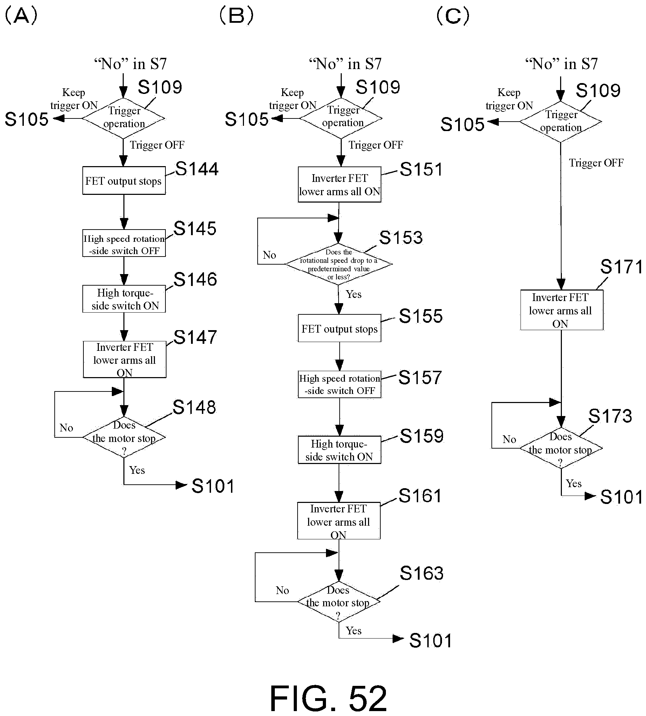

(Second control example) FIG. 52(A) is a flowchart showing the second control example of the work machine 4. The second control example is different from the first control example in the control in the case where the trigger switch 306 is turned off in the high speed rotation mode (delta connection), but is the same in other aspects. The following description will focus on the differences.

In the case where the trigger switch 306 is off ("Trigger OFF" in S109), the computing unit 50 turns off the six switching elements of the inverter circuit 64 (S144), turns off the three delta connection relay elements 32 (S145), turns on the three star connection relay elements 33 (S146), turns on the three lower switching elements 73 of the inverter circuit 64 (S147), and applies an electric brake to the motor 340 in the state of the high torque mode (star connection). The number of the lower switching elements 73 that are turned on in S147 may be one or two. The computing unit 50 continues the electric brake until the motor 340 stops (No in S148), and when the motor 340 stops (Yes in S148), the computing unit 50 returns to S101.

In this way, the computing unit 50 is configured to switch to the high torque mode (star connection), apply an electric brake to the motor 340, and stop the motor 340 when the trigger switch 306 is turned off in the high speed rotation mode (delta connection). At this time, after the three star connection relay elements 33 are turned on, the three lower switching elements 73 of the inverter circuit 64 are turned on.

(Third control example) FIG. 52(B) is a flowchart showing the third control example of the work machine 4. The third control example is different from the first control example in the control in the case where the trigger switch 306 is turned off in the high speed rotation mode (delta connection), but is the same in other aspects. The following description will focus on the differences.

When the trigger switch 306 is turned off in the high speed rotation mode (delta connection) ("Trigger OFF" in S109), the computing unit 50 turns on the three lower switching elements 73 of the inverter circuit 64 (S151) and applies an electric brake to the motor 340 while in the high speed rotation mode (delta connection). The computing unit 50 continues the electric brake in S151 until the motor rotational speed drops to a predetermined rotational speed or less ("No" in S153). The number of the lower switching elements 73 that are turned on in S151 may be one or two.

When the motor rotational speed drops to the predetermined rotational speed or less (Yes in S153), the computing unit 50 turns off the six switching elements of the inverter circuit 64 (S155), turns off the three delta connection relay elements 32 (S157), turns on the three star connection relay elements 33 (S159), turns on the three lower switching elements 73 of the inverter circuit 64 (S161), and applies an electric brake to the motor 340 in the high torque mode (star connection) to stop the motor 340 (No in S163). The number of the lower switching elements 73 that are turned on in S161 may be one or two.

In this way, the computing unit 50 is configured to apply an electric brake to the motor 340 to reduce the motor rotational speed to the predetermined rotational speed or less, and then switch to the high torque mode (star connection) to apply an electric brake to the motor 340 when the trigger switch 306 is turned off in the high speed rotation mode (delta connection).

(Fourth control example) FIG. 52(C) is a flowchart showing the fourth control example of the work machine 4. The fourth control example is different from the first control example in the control in the case where the trigger switch 306 is turned off in the high speed rotation mode (delta connection), but is the same in other aspects. The following description will focus on the differences.

When the trigger switch 306 is turned off in the high speed rotation mode (delta connection) ("Trigger OFF" in S109), the computing unit 50 turns on the three lower switching elements 73 of the inverter circuit 64 (S171), applies an electric brake to the motor 340 while in the high speed rotation mode (delta connection), and stops the motor 340 ("No" in S173). The number of the lower switching elements 73 that are turned on in S171 may be one or two.

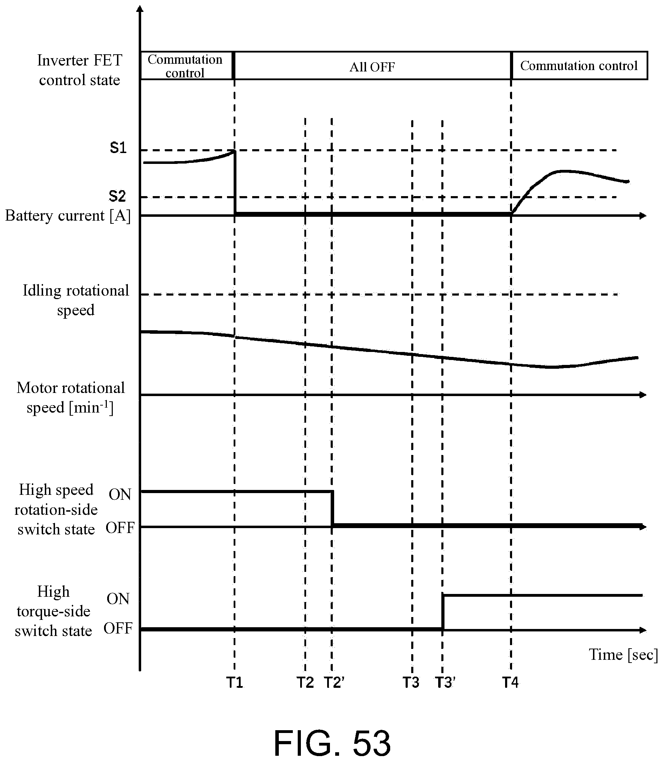

(First action example) FIG. 53 is a time chart of the first action example of the work machine 4, which includes an action of switching the coil connection scheme from delta connection for high speed rotation to star connection for high torque in response to an increase in the work load. In this time chart, the trigger switch 306 is continuously turned on. In FIG. 53, S1 indicates an overload detection threshold value, and S2 indicates a light load detection threshold value.

Before time T1, there is a light load state, and the computing unit 50 drives the motor 340 in the high speed rotation mode (delta connection). That is, the computing unit 50 performs commutation control (drive control of the motor 340) by the inverter circuit 64 with the three delta connection relay elements 32 turned on and the three star connection relay elements 33 turned off.

At time T1, the work load increases to the overload detection threshold value S1, and the computing unit 50 detects an overload state and turns off the six switching elements of the inverter circuit 64. At time T2, the computing unit 50 outputs an off signal to the three delta connection relay elements 32. At subsequent time T2', the three delta connection relay elements 32 are turned off. Since the relay element is of the contact type, there is a large time lag between the signal output from the computing unit 50 and the actual switch of on/off of the relay element, compared to the case of a semiconductor switching element.

At time T3, the computing unit 50 outputs an on signal to the three star connection relay elements 33. At subsequent time T3', the three star connection relay elements 33 are turned on. At time T4, the computing unit 50 resumes the commutation control (drive control of the motor 340) by the inverter circuit 64.

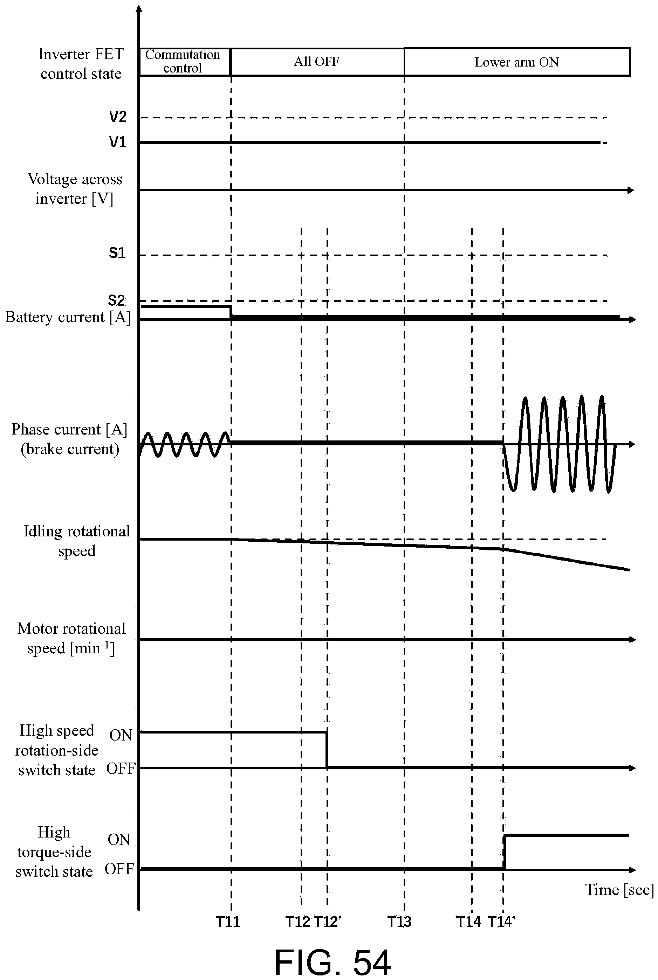

(Second action example) FIG. 54 is a time chart of the second action example of the work machine 4, and is a time chart including the action corresponding to the control in S109 to S117 of FIG. 51. In FIG. 54, S1 indicates an overload detection threshold value, S2 indicates a light load detection threshold value, V1 indicates a battery voltage, and V2 indicates a rated voltage of the switching element of the inverter circuit 64.

Before time T11, there is a light load state, and the computing unit 50 drives the motor 340 in the high speed rotation mode (delta connection). That is, the computing unit 50 performs commutation control (drive control of the motor 340) by the inverter circuit 64 with the three delta connection relay elements 32 turned on and the three star connection relay elements 33 turned off.

At time T11, the trigger switch 306 is turned off, and the computing unit 50 turns off the six switching elements of the inverter circuit 64. At time T12, the computing unit 50 outputs an off signal to the three delta connection relay elements 32. At subsequent time T12', the three delta connection relay elements 32 are turned off.

At time T13, the computing unit 50 turns on all of the lower switching elements 73 of the inverter circuit 64. The number of the lower switching elements 73 that are turned on may be one or two. The computing unit 50 outputs an on signal to the three star connection relay elements 33 at time T14. At subsequent time T14', the three star connection relay elements 33 are turned on. From time T14', the electric brake begins to function, a brake current flows through the stator coil 345, and the motor rotational speed decreases at a faster rate.

In the second action example, at time T14' when the three star connection relay elements 33 are turned on, the lower switching elements 73 of the inverter circuit 64 are already on, and a closed loop through which regenerative current flows is established. Therefore, even if the trigger switch 306 is turned off in a state where the motor rotational speed is close to the idling rotational speed, the voltage applied to the switching elements of the inverter circuit 64 (voltage across inverter) does not rise above the battery voltage V1.

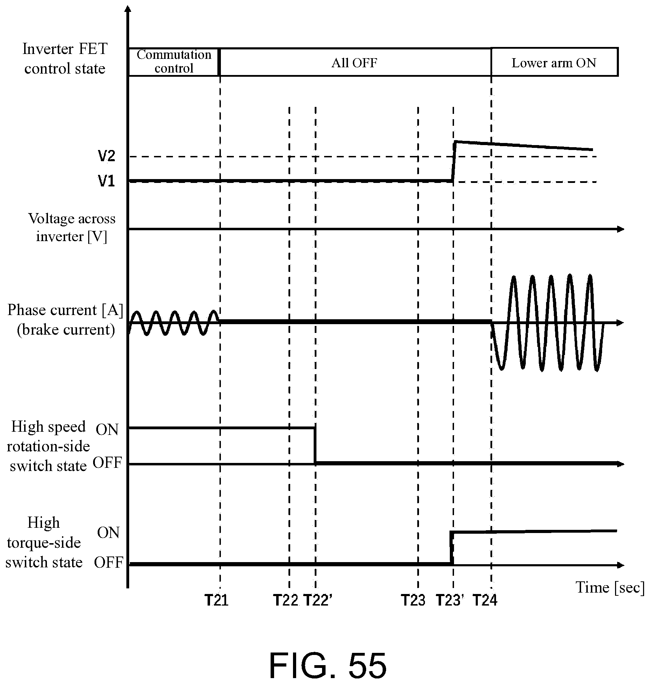

(Third action example) FIG. 55 is a time chart of the third action example of the work machine 4. In FIG. 55, V1 indicates the battery voltage, and V2 indicates the rated voltage of the switching elements of the inverter circuit 64.

Before time T21, there is a light load state, and the computing unit 50 drives the motor 340 in the high speed rotation mode (delta connection). That is, the computing unit 50 performs commutation control (drive control of the motor 340) by the inverter circuit 64 with the three delta connection relay elements 32 turned on and the three star connection relay elements 33 turned off.

At time T21, the trigger switch 306 is turned off, and the computing unit 50 turns off the six switching elements of the inverter circuit 64. At time T22, the computing unit 50 outputs an off signal to the three delta connection relay elements 32. At subsequent time T22', the three delta connection relay elements 32 are turned off.

At time T23, the computing unit 50 outputs an on signal to the three star connection relay elements 33. At subsequent time T23', the three star connection relay elements 33 are turned on. At time T24, the computing unit 50 turns on all of the lower switching elements 73 of the inverter circuit 64. From time T24, the electric brake begins to function, a brake current flows through the stator coil 345, and the motor rotational speed decreases at a faster rate.

In the third action example, at time T23' when the three star connection relay elements 33 are turned on, all of the six switching elements of the inverter circuit 64 are turned off, and a closed loop through which regenerative current flows is not established. In the above-mentioned second action example, the moment the three star connection relay elements 33 are turned on and a closed loop is established, large regenerative current flows, and there is a risk that the three star connection relay elements 33 may be damaged. The third action example is intended to suppress the risk of damage to such star connection relay elements 33. On the other hand, in the third action example, the trigger switch 306 is turned off while the motor 340 is being driven in the high speed rotation mode (delta connection), that is, while the motor rotational speed is high. Therefore, the voltage applied to the switching elements of the inverter circuit 64 (voltage across inverter) rises above the battery voltage V1 and exceeds the rated voltage V2 of the switching elements of the inverter circuit 64, which imposes a risk of damage to the switching elements. The above-mentioned second action example is intended to suppress the risk of such damage to the switching elements.

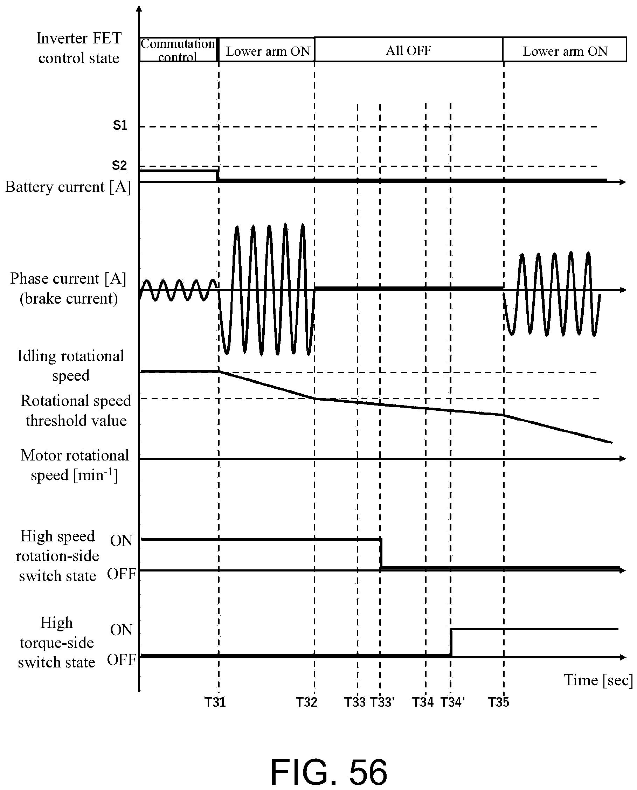

(Fourth action example) FIG. 56 is a time chart of the fourth action example of the work machine 4, and is a time chart including the action corresponding to the control in S109 to S161 of FIG. 52(B). In FIG. 56, S1 indicates an overload detection threshold value, and S2 indicates a light load detection threshold value.

Before time T31, there is a light load state, and the computing unit 50 drives the motor 340 in the high speed rotation mode (delta connection). That is, the computing unit 50 performs commutation control (drive control of the motor 340) by the inverter circuit 64 with the three delta connection relay elements 32 turned on and the three star connection relay elements 33 turned off.

At time T31, the trigger switch 306 is turned off, and the computing unit 50 turns on all of the lower switching elements 73 of the inverter circuit 64. From time T31, the electric brake begins to function, a brake current flows through the stator coil 345, and the motor rotational speed decreases at a faster rate.

At time T32, the motor rotational speed drops to a predetermined rotational speed (rotational speed threshold value) or less, and the computing unit 50 turns off the six switching elements of the inverter circuit 64. At this point, the electric brake is stopped. The computing unit 50 detecting that the motor rotational speed has dropped to the predetermined rotational speed or less outputs an off signal to the three delta connection relay elements 32 at time T33. At subsequent time T33', the three delta connection relay elements 32 are turned off.

At time T34, the computing unit 50 outputs an on signal to the three star connection relay elements 33. At subsequent time T34', the three star connection relay elements 33 are turned on. At time T35, the computing unit 50 turns on all of the lower switching elements 73 of the inverter circuit 64. The number of the lower switching elements 73 that are turned on may be one or two. From time T35, the electric brake begins to function again, a brake current flows through the stator coil 345, and the motor rotational speed decreases at a faster rate.

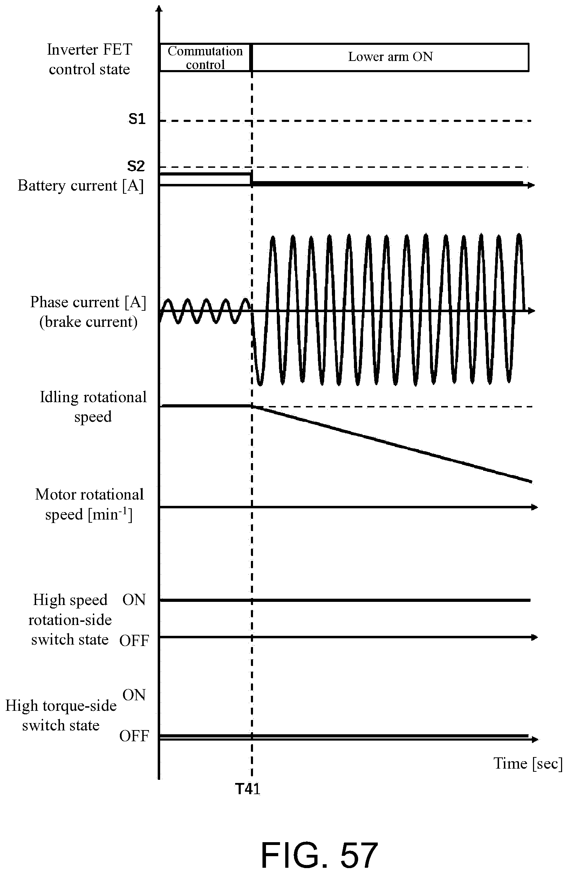

(Fifth action example) FIG. 57 is a time chart of the fifth action example of the work machine 4, and is a time chart including the action corresponding to the control in S109 and S171 of FIG. 52(C). In FIG. 57, S1 indicates an overload detection threshold value, and S2 indicates a light load detection threshold value.

Before time T41, there is a light load state, and the computing unit 50 drives the motor 340 in the high speed rotation mode (delta connection). That is, the computing unit 50 performs commutation control (drive control of the motor 340) by the inverter circuit 64 with the three delta connection relay elements 32 turned on and the three star connection relay elements 33 turned off.

At time T41, the trigger switch 306 is turned off, and the computing unit 50 turns on all of the lower switching elements 73 of the inverter circuit 64. The number of the lower switching elements 73 that are turned on may be one or two. From time T41, the electric brake begins to function, a brake current flows through the stator coil 345, and the motor rotational speed decreases at a faster rate.

This embodiment achieves the following effects.
(1) In the case where the load state changes from a light load state to an overload state, the computing unit 50 is configured to execute control in the following order: turn off the six switching elements of the inverter circuit 64, turn off the three delta connection relay elements 32, turn on the three star connection relay elements 33, and control the inverter circuit 64 to drive the motor 340. Thus, no current flows the moment the three star connection relay elements 33 are turned on, which is advantageous in terms of durability of the three star connection relay elements 33.
(2) In the case where the load state changes from an overload state to a light load state, the computing unit 50 is configured to execute control in the following order: turn off the six switching elements of the inverter circuit 64, turn off the three star connection relay elements 33, turn on the three delta connection relay elements 32, and control the inverter circuit 64 to drive the motor 340. Thus, no current flows the moment the three delta connection relay elements 32 are turned on, which is advantageous in terms of durability of the three delta connection relay elements 32.
(3) In the first control example shown in FIG. 51, when the trigger switch 306 is turned off in the high speed rotation mode (delta connection), the computing unit 50 is configured to switch to the high torque mode (star connection) and apply an electric brake to the motor 340 to stop the motor 340. Therefore, compared to the case where the electric brake is applied in the high speed rotation mode (delta connection), the brake current can be suppressed, and the temperature rise of the inverter circuit 64 can be suppressed. In addition, the recoil caused by the electric brake is suppressed, making it easy to use.
(4) In the first control example shown in FIG. 51, when the trigger switch 306 is turned off in the high speed rotation mode (delta connection), the computing unit 50 is configured to execute control in the following order: turn off the six switching elements of the inverter circuit 64, turn off the three delta connection relay elements 32, turn on the three lower switching elements 73 of the inverter circuit 64, and turn on the three star connection relay elements 33. Thus, at the time when the three star connection relay elements 33 are turned on, the lower switching elements 73 of the inverter circuit 64 are already on, and a closed loop through which regenerative current flows is established. Therefore, even if the trigger switch 306 is turned off in a state where the motor rotational speed is close to the idling rotational speed, the voltage applied to the switching elements of the inverter circuit 64 is prevented from jumping up, making it possible to prevent damage to electronic components such as the switching elements.
(5) In the second control example shown in FIG. 52(A), when the trigger switch 306 is turned off in the high speed rotation mode (delta connection), the computing unit 50 is configured to execute control in the following order: turn off the six switching elements of the inverter circuit 64, turn off the three delta connection relay elements 32, turn on the three star connection relay elements 33, and turn on the three lower switching elements 73 of the inverter circuit 64. Thus, at the time when the three star connection relay elements 33 are turned on, all the six switching elements of the inverter circuit 64 are turned off, and a closed loop through which regenerative current flows is not established. In the above-mentioned first control example, the moment the three star connection relay elements 33 are turned on and a closed loop is established, large regenerative current flows, and there is a risk that the three star connection relay elements 33 may be damaged. However, the second control example can reduce the risk of such damage to the star connection relay elements 33.
(6) In the third control example shown in FIG. 52(B), when the trigger switch 306 is turned off in the high speed rotation mode (delta connection), the computing unit 50 is configured to apply an electric brake to the motor 340 to reduce the motor rotational speed to a predetermined rotational speed or less, and then switch to the high torque mode (star connection) to apply an electric brake to the motor 340. During electric braking after the motor rotational speed has dropped to the predetermined rotational speed or less, the three star connection relay elements 33 are turned on and then the three lower switching elements 73 of the inverter circuit 64 are turned on. This prevents current from flowing the moment the three star connection relay elements 33 are turned on, which is advantageous in terms of durability of the three star connection relay elements 33. In addition, since the rotational speed of the motor 340 has dropped to the predetermined rotational speed or less, the back electromotive voltage generated from the motor 340 when the three lower switching elements 73 of the inverter circuit 64 are turned on after the three star connection relay elements 33 are turned on can be suppressed. By suppressing the back electromotive voltage, the risk of damage to the switching elements 73 can be reduced. In particular, by setting the predetermined rotational speed so that the back electromotive voltage does not exceed the voltage of the battery pack 307, the risk of damage to the switching elements 73 can be effectively reduced. Furthermore, since no current flows through the three star connection relay elements 33 the moment the three star connection relay elements 33 are turned on, the control is advantageous in terms of durability of the three star connection relay elements 33.
(7) In the fourth control example shown in FIG. 52(C), when the trigger switch 306 is turned off in the high speed rotation mode (delta connection), the computing unit 50 turns on the three lower switching elements 73 of the inverter circuit 64, applies an electric brake to the motor 340 while in the high speed rotation mode (delta connection), and stops the motor 340. Thus, even if the trigger switch 306 is turned off in the high speed rotation mode (delta connection), the three delta connection relay elements 32 and the three star connection relay elements 33 are not switched on/off, which is advantageous in terms of durability of the three delta connection relay elements 32 and the three star connection relay elements 33.

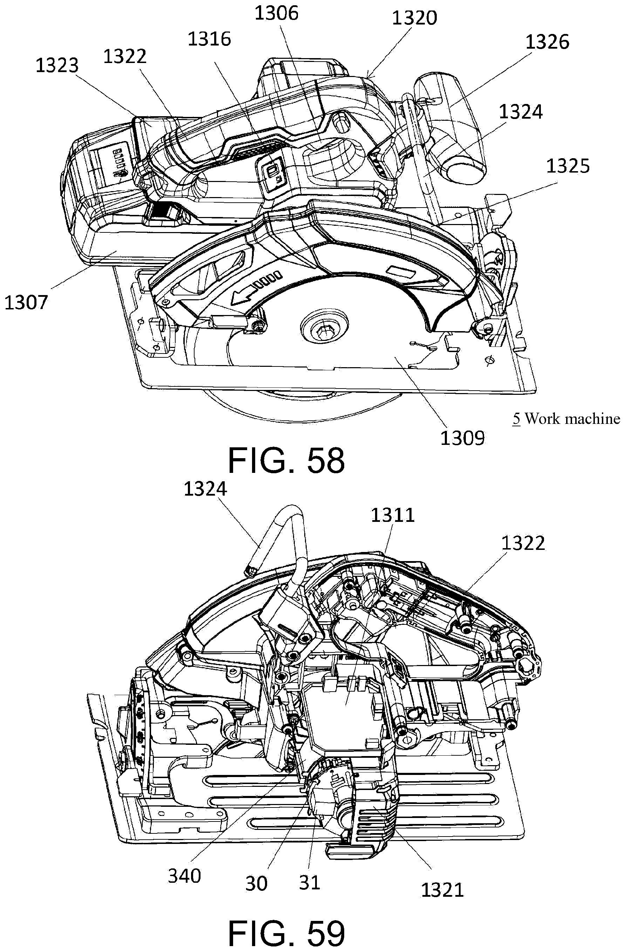

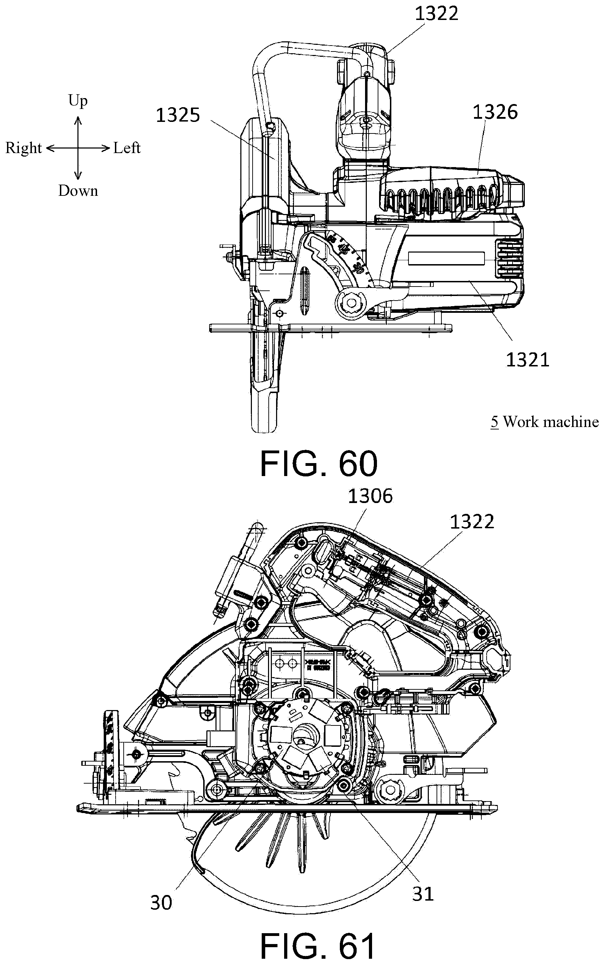

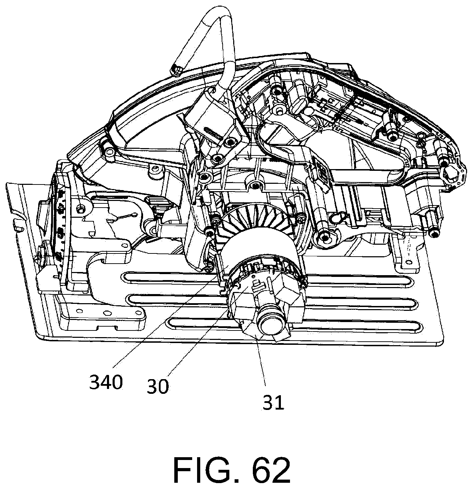

(Seventh embodiment) FIG. 58 to FIG. 62 relate to a work machine 5 according to the seventh embodiment of the present invention. The work machine 5 has a mechanical configuration that is partially different from the work machine in each of the embodiments described above. The circuit configuration and control of the work machine 5 can be applied to any of the work machines in the embodiments described above. FIG. 60 and FIG. 61 define the mutually orthogonal front-rear, up-down, and left-right directions of the work machine 5. The work machine 5 is a portable circular saw. The work machine 5 includes a housing 1320.

The housing 1320 is, for example, a resin molded body and includes a motor housing 1321 that houses the motor 340 or the like, a handle housing 1322 that is gripped by the operator, and a battery mounting portion 1323.

The motor housing 1321 is a cylindrical portion whose central axis is substantially parallel to the left-right direction. The handle housing 1322 extends obliquely in the front-rear and up-down directions above the right portion of the motor housing 1321. A trigger switch 1306 is provided at the upper end portion of the handle housing 1322 for the user to instruct start and stop of the motor 340.

A gear case (saw cover) 1325 made of metal is connected to the left side of the handle housing 1322. The gear case 1325 houses a reduction mechanism (not shown) and covers the upper half of a saw blade 1309.

The battery mounting portion 1323 extends to the left from the rear end portion of the handle housing 1322, and allows a battery pack 1307, which serves as a power supply, to be detachably mounted thereto. The work machine 5 operates on the power of the battery pack 1307. The work machine 5 has an operation panel 1316 above the battery mounting portion 1323. The user switches the action mode of the work machine 5 by the operation panel 1316.

A hook 1324 is attached to the front of the handle housing 1322, and is configured for the work machine 5 to be hooked onto a hooked portion. The hook 1324 is rotatably attached to the housing 1320. Further, a sub-handle 1326 is provided above the motor housing 1321. The sub-handle 1326 is a portion that is gripped by the operator during work.

The work machine 5 has a motor 340 inside the motor housing 1321. The rotation of the motor 340 is reduced in speed by the reduction mechanism in the gear case 1325 and transmitted to the saw blade 1309.

The work machine 5 has a control board 1311 (FIG. 59) inside the motor housing 1321, and a plurality of battery connection terminals (not shown) inside the battery mounting portion 1323. The control board 1311 has mounted thereon various circuits such as the above-mentioned computing unit 50, control power supply circuit 51, inverter circuit 64, etc. The plurality of battery connection terminals face below the battery mounting portion 1323. The plurality of battery connection terminals come into contact with and are electrically connected to terminals of the battery pack 1307 mounted to the battery mounting portion 1323.

As shown in FIG. 59, the work machine 5 has a relay board 30 inside the motor housing 1321. The relay board 30 has a plurality of relay elements 31 mounted thereon. The relay board 30 is attached to the motor 340 with screws or the like. The relay board 30 faces an air hole provided in the motor housing 1321.

Although the present invention has been described above with reference to the embodiments as examples, the present invention is not limited to the embodiments. Various modifications can be made to each of the details specifically described in the embodiments within the scope of the claims.

In the first and fourth to sixth embodiments, the operation mode may be the automatic switching mode only. In this case, the operation mode switching switch 312 and the operation mode display LED 313 may be omitted.

The motor current, motor rotational speed, motor torque, battery current, saw blade rotational speed, saw blade torque, time, various voltages (inverter voltage, rated voltage, allowable voltage, etc.), rated capacity, values of current ranges and time threshold values for each of the winding switching condition and overcurrent protection activation condition, etc., exemplified as specific numerical values in the embodiments are not intended to limit the scope of the invention in any way and can be changed as desired to suit the required specifications.

The work machine of the present invention is not limited to a portable circular saw, but may be other types of work machines for cutting such as a bench circular saw, a rotary band saw, a jigsaw, a saber saw (reciprocating saw), and a brush cutter. In addition, the work machine of the present invention may be a grinding machine having a grinding tip tool such as a grinder, a polishing machine having a polishing tip tool such as a sander or polisher, a cutting machine having a cutting tip tool such as a plane, trimmer, or router, a drilling machine having a drilling tip tool such as a drill, hammer, or earth auger, a tightening machine having a tightening tip tool such as an impact driver, impact wrench, driver drill, shear wrench, riveter, or rebar tying machine, a crimping machine having a crimping tip tool such as a crimper, a bending machine having a bending tip tool such as a rebar bender, or a driving machine having a driving tip tool such as a nailer or tacker.

### Reference Signs List

1 to 5...work machine, 50...computing unit (controller), 51...control power supply circuit (control circuit voltage supply circuit), 52...current detection circuit (motor current detection circuit), 53...switch operation detection circuit, 54...battery type detection circuit, 55...voltage detection circuit (battery voltage detection circuit), 56...control signal circuit (control signal output circuit), 57...rotational position detection circuit (rotor position detection circuit), 58...rotational speed detection circuit, 59...action mode detection circuit, 61...illumination LED drive circuit, 62...illumination LED, 63...Hall IC (magnetic sensor), 64...inverter circuit, 65...detection resistor, 66...LD detection circuit, 67...battery cell, 68...protection IC (battery-side controller), 69...battery temperature detection circuit, 70...thermistor (temperature detection element), 71...circuit temperature detection circuit, 72...upper switching element, 73...lower switching element, 74...control circuit voltage detection circuit, 75...display LED drive circuit, 76...winding switching operation output circuit, 306...trigger switch, 307...battery pack, 309...saw blade, 311...control board, 312...operation mode switching switch, 313...operation mode display LED, 314...light mode switching switch, 315...light mode display LED, 316...operation panel, 317...light mode display LED, 320...housing, 321...motor housing, 322...handle housing, 323...battery mounting portion, 324...intermediate housing, 325...gear case (saw cover), 327...battery connection terminal, 328...cover member, 340...motor, 341...motor shaft, 342...rotor core, 343...rotor magnet (permanent magnet), 344...stator core, 345...stator coil, 346...yoke portion, 347...teeth (tooth portion), 1306...trigger switch, 1307...battery pack, 1309...saw blade, 1311...control board, 1316...operation panel, 1320...housing, 1321...motor housing, 1322...handle housing, 1323...battery mounting portion, 1324...hook, 1325...gear case (saw cover), 1326...sub-handle.

## Claims

1. A work machine, comprising:
a motor having a plurality of windings;
a drive unit driving the motor;
a connection switching unit configured to be capable of switching between a high rotational speed connection state in which the plurality of windings are connected to each other to have a high rotational speed characteristic, and a high torque connection state in which the plurality of windings are connected to each other to have a high torque characteristic;
an operation unit operating start and stop of the motor; and
a controller controlling the drive unit and the connection switching unit,
wherein the controller is capable of executing connection switching control for switching from the high rotational speed connection state to the high torque connection state, and is configured to start the connection switching control in a state where a rotational speed of the motor is higher than an idling rotational speed of the high torque connection state.

2. The work machine according to claim 1, wherein the idling rotational speed of the high torque connection state is a rotational speed of the motor at an intersection point of an extension line obtained by extending a characteristic line of a portion of the high torque connection state and a straight line with a torque of 0 in a case where a graph, with a horizontal axis being torque and a vertical axis being rotational speed, shows a relationship between the rotational speed and torque of the motor as the characteristic line.

3. The work machine according to claim 1, wherein the controller is configured to complete the connection switching control in a state where the rotational speed of the motor becomes equal to or lower than the idling rotational speed of the high torque connection state.

4. The work machine according to claim 1, wherein the controller is configured to switch the drive unit to a drive stop state in which supply of drive power to the motor is stopped, and to switch the connection switching unit to a connection terminated state in which at least some of the plurality of windings are cut off, in the connection switching control.

5. The work machine according to claim 4, wherein the controller is configured to switch the connection switching unit from the high rotational speed connection state to the connection terminated state when the drive unit is in the drive stop state, in the connection switching control.

6. The work machine according to claim 4, wherein the controller is configured to switch the connection switching unit from the connection terminated state to the high torque connection state when the drive unit is in the drive stop state, in the connection switching control.

7. A work machine, comprising:
a motor having a plurality of windings;
a drive unit driving the motor;
a connection switching unit configured to be capable of switching from one connection state to the other connection state of a high rotational speed connection state in which the plurality of windings are connected to each other to have a high rotational speed characteristic, and a high torque connection state in which the plurality of windings are connected to each other to have a high torque characteristic;
an operation unit operating start and stop of the motor; and
a controller controlling the drive unit and the connection switching unit,
wherein the controller is capable of executing connection switching control for switching from the one connection state to the other connection state, and is configured to switch the drive unit to a drive stop state in which supply of drive power to the motor is stopped, and to switch the connection switching unit from the one connection state to a connection terminated state in which the plurality of windings are cut off from each other, in the connection switching control.

8. The work machine according to claim 7, wherein the controller is configured to switch the connection switching unit from the one connection state to the connection terminated state when the drive unit is in the drive stop state, in the connection switching control.

9. The work machine according to claim 7, wherein the controller is configured to switch the connection switching unit from the connection terminated state to the other connection state when the drive unit is in the drive stop state, in the connection switching control.

10. A work machine, comprising:
a motor having a rotor and a stator having a plurality of windings;
a connection switching unit capable of switching a connection scheme of the plurality of windings between a first connection scheme for high speed rotation and a second connection scheme for high torque;
a drive unit having a plurality of switching elements and driving the motor; and
a controller controlling the drive unit and the connection switching unit,
wherein the controller is configured in a first mode to be capable of executing connection switching control for switching the connection scheme from the first connection scheme to the second connection scheme in response to an increase in a work load applied to the motor, and is configured to be capable of executing overload protection control for stopping the motor not before the connection switching control but only after the connection switching control when the work load satisfies an overload protection condition.

11. The work machine according to claim 10, wherein the controller is configured in the first mode to execute the connection switching control when work is performed by pressing the work machine against a counter material with a first pressing force or when work is performed at a first work load increase rate, and
to execute the overload protection control immediately after the connection switching control to stop the motor when work is performed by pressing the work machine against the counter material with a second pressing force greater than the first pressing force or when work is performed at a second work load increase rate greater than the first work load increase rate.

12. A work machine, comprising:
a motor having a rotor and a stator having a plurality of windings;
a connection switching unit capable of switching a connection scheme of the plurality of windings between a first connection scheme for high speed rotation and a second connection scheme for high torque;
a drive unit having a plurality of switching elements and driving the motor;
a controller controlling the drive unit and the connection switching unit; and
a mode selection unit operable by an operator,
wherein the controller is configured to be capable of selecting whether to drive the motor in a first mode configured to be capable of executing connection switching control for switching the connection scheme from the first connection scheme to the second connection scheme in response to an increase in a work load applied to the motor, or
a second mode configured to maintain the connection scheme in the second connection scheme, in response to an operation of the mode selection unit performed by the operator.

13. The work machine according to claim 12, wherein the controller is configured in the first mode to maintain driving of the motor after executing the connection switching control when work is performed by pressing the work machine against a counter material with a first pressing force or when work is performed at a first work load increase rate, and
to execute overload protection control immediately after executing the connection switching control to stop the motor when work is performed by pressing the work machine against the counter material with a second pressing force greater than the first pressing force or when work is performed at a second work load increase rate greater than the first work load increase rate.

14. The work machine according to claim 13, wherein the controller is configured in the second mode not to stop the motor by the overload protection control when work is performed by pressing the work machine against the counter material with the second pressing force or when work is performed at the second work load increase rate.

15. The work machine according to claim 12, wherein the controller is configured to stop driving of the motor when executing the connection switching control, and resume driving of the motor immediately after executing the connection switching control.

16. The work machine according to claim 15, wherein the controller is configured in the first mode to stop the motor by the overload protection control immediately after executing the connection switching control and resuming driving of the motor when work is performed by pressing the work machine against a counter material with a second pressing force greater than the first pressing force or when work is performed at a second work load increase rate greater than the first work load increase rate.

17. The work machine according to any one of claims 10 to 16, wherein a first winding switching threshold value, which is a threshold value of the work load in a case where the connection scheme is switched from the first connection scheme to the second connection scheme, is equal to or smaller than an overload protection threshold value, which is a threshold value of the work load in a case where the motor is stopped by overload protection control.

18. The work machine according to claim 17, wherein the first winding switching threshold value is equal to or greater than 2/3 of the overload protection threshold value.

19. The work machine according to claim 17, wherein the first winding switching threshold value is equal to the overload protection threshold value.

20. The work machine according to any one of claims 10 to 16, wherein the controller provides a pause period in which all of the plurality of switching elements are turned off when switching the connection scheme.

21. The work machine according to any one of claims 10 to 16, wherein in the first mode, the controller switches the connection scheme to the second connection scheme when the work load increases and becomes equal to or greater than the first winding switching threshold value while setting the connection scheme as the first connection scheme, and
switches the connection scheme to the first connection scheme when the work load decreases and becomes equal to or smaller than a second winding switching threshold value while setting the connection scheme as the second connection scheme, and
the first winding switching threshold value is greater than the second winding switching threshold value.

22. The work machine according to any one of claims 10 to 16, comprising a battery mounting portion capable of mounting a battery pack which is a battery pack serving as a power supply of the motor and outputs a discharge stop signal when a discharge current exceeds a battery-side overcurrent protection threshold value,
wherein the controller stops the motor when a current flowing through the motor exceeds a main body-side overcurrent protection threshold value, and
the battery-side overcurrent protection threshold value is greater than the main body-side overcurrent protection threshold value.

23. The work machine according to claim 22, wherein the controller is configured to stop the motor when the discharge stop signal is input.

24. A work machine, comprising:
a motor having a plurality of windings driven by supply power from a power supply;
a connection switching unit capable of switching a connection scheme of the plurality of windings of the motor between a first connection scheme for high speed rotation and a second connection scheme for high torque;
a controller controlling the motor and the connection switching unit;
a housing housing the motor, the connection switching unit, and the controller; and
a detection unit detecting a physical quantity that changes due to driving of the motor or a type of the power supply,
wherein the controller is configured to execute connection switching control for switching the connection scheme from the first connection scheme to the second connection scheme in a case when a predetermined winding switching condition is satisfied,
the detected value comprises a work load applied to the motor, and
the winding switching condition comprises a duration of any of the work load equal to or greater than a load threshold value being equal to or greater than a time threshold value that varies depending on a magnitude of the work load.

25. The work machine according to claim 24, wherein the controller is configured to switch the connection scheme from the first connection scheme to the second connection scheme in a case where a state in which a first work load is applied to the motor continues for a first time, and
to switch the connection scheme from the first connection scheme to the second connection scheme in a case where a state in which a second work load greater than the first work load is applied to the motor continues for a second time shorter than the first time.

26. The work machine according to claim 24, wherein the detected value comprises a work load applied to the motor and a temperature of a heating element that forms the work machine, and
the winding switching condition comprises a duration of any of the work load equal to or greater than a load threshold value being equal to or greater than a time threshold value, and a combination of the work load and the time threshold value varies depending on the temperature.

27. The work machine according to claim 26, wherein the controller is configured to switch the connection scheme from the first connection scheme to the second connection scheme in a case where the temperature of the heating element is a first temperature and a state in which a work load applied to the motor is a predetermined value continues for a first time, and
to switch the connection scheme from the first connection scheme to the second connection scheme in a case where the temperature of the heating element is a second temperature higher than the first temperature and the state in which the work load is the predetermined value continues for a second time shorter than the first time.

28. The work machine according to claim 24, wherein the detected value comprises a work load applied to the motor and a type of the power supply, and
the winding switching condition comprises a duration of any of the work load equal to or greater than a load threshold value being equal to or greater than a time threshold value, and a combination of the work load and the time threshold value varies depending on the rated capacity.

29. The work machine according to claim 28, wherein the controller is configured to switch the connection scheme from the first connection scheme to the second connection scheme in a case where a capacity of the power supply is a first capacity and a state in which a work load applied to the motor is a first load value continues for a predetermined time, and
to switch the connection scheme from the first connection scheme to the second connection scheme in a case where the capacity of the power supply is a second capacity smaller than the first capacity and a state in which the work load is a second load value smaller than the first load value continues for the predetermined time.

30. The work machine according to claim 24, wherein the winding switching condition is set according to a detected value in the detection unit so that the connection scheme is switched from the first connection scheme to the second connection scheme before overload protection is activated and the motor stops.

31. The work machine according to claim 30, wherein the overload protection is configured to be executed in a case where a first work load applied as a work load to the motor continues for a first time, and
switching of the connection scheme is configured to be executed in a case where a second work load applied as the work load continues for a second time.

32. The work machine according to claim 31, wherein the first work load and the second work load are substantially the same load value or load range, and
the second time is shorter than the first time.

33. The work machine according to claim 31, wherein the first time and the second time are substantially the same time or time range, and
the second work load is smaller than the first work load.

34. The work machine according to any one of claims 31 to 33, wherein the second time is shorter in a case where the second work load is large than in a case where the second work load is small.

35. The work machine according to claim 34, wherein the first time is shorter in a case where the first work load is large than in a case where the first work load is small.

36. The work machine according to claim 24, wherein the power supply is formed by a battery pack that is attachable to and detachable from the housing.

37. A work machine, comprising:
a motor having a rotor and a stator having a plurality of windings;
a connection switching unit switching connection of the plurality of windings;
a drive unit having a plurality of switching elements and driving the motor;
a controller controlling the drive unit and the connection switching unit; and
a switch instructing start and stop of the motor,
wherein the controller is configured to control the connection switching unit to switch the connection from a high speed rotation mode to a high torque mode when a load applied to the motor increases, and
the controller is configured to switch to the high torque mode and apply an electric brake to the motor when the switch is turned off in the high speed rotation mode.

38. The work machine according to claim 37, wherein the connection switching unit has a high speed rotation-side switching unit that is turned on in the high speed rotation mode, and a high torque-side switching unit that is turned on in the high torque mode, and
the controller is configured to turn off the plurality of switching elements and the high speed rotation-side switching unit and turn on some of the plurality of switching elements and the high torque-side switching unit when the switch is turned off in the high speed rotation mode and an electric brake is applied to the motor by switching to the high torque mode.

39. The work machine according to claim 38, wherein the controller is configured to turn off the plurality of switching elements and the high speed rotation-side switching unit, then turn on the high torque-side switching unit, and then turn on some of the plurality of switching elements when the switch is turned off in the high speed rotation mode and an electric brake is applied to the motor by switching to the high torque mode.

40. The work machine according to claim 38, wherein the controller is configured to turn off the plurality of switching elements and the high speed rotation-side switching unit, then turn on some of the plurality of switching elements, and then turn on the high torque-side switching unit when the switch is turned off in the high speed rotation mode and an electric brake is applied to the motor by switching to the high torque mode.

41. The work machine according to claim 37, wherein the controller is configured to apply an electric brake to the motor to reduce a rotational speed of the motor to a predetermined rotational speed or lower, and then switch to the high torque mode to apply an electric brake to the motor when the switch is turned off in the high speed rotation mode.

42. A work machine, comprising:
a motor having a rotor and a stator having a plurality of windings;
a connection switching unit switching connection of the plurality of windings;
a drive unit having a plurality of switching elements and driving the motor;
a controller controlling the drive unit and the connection switching unit; and
a switch instructing start and stop of the motor,
wherein the controller is configured to control the connection switching unit to switch the connection from a high speed rotation mode to a high torque mode when a load applied to the motor increases, and
the controller is configured to apply an electric brake to the motor while in the high speed rotation mode to stop the motor when the switch is turned off in the high speed rotation mode.

43. The work machine according to claim 37 or 42, wherein the connection in the high speed rotation mode is delta connection, and the connection in the high torque mode is Y connection.
